# EUROPÄISCHE PATENTSCHRIFT

(11) **EP 3 362 255 B1**
(45) Veröffentlichungstag und Bekanntmachung des Hinweises auf die Patenterteilung: **24.07.2019**
(21) Anmeldenummer: 16784441.4
(22) Anmeldetag: 14.10.2016
(51) Int. Cl.: B29C 65/08, B29C 65/16, B29C 65/40, B29C 65/48, B29C 65/52, B29C 65/06, B29C 65/10, B29C 65/14, B29C 65/18, B29C 65/78, B29K 101/12, B29L 7/00

(54) **VERFAHREN ZUM STOFFSCHLÜSSIGEN FÜGEN VON ZWEI WERKSTÜCKEN**
METHOD FOR THE SUBSTANCE-TO-SUBSTANCE BONDING OF TWO WORKPIECES
PROCEDE D'ASSEMBLAGE PAR COHESION DE LA MATIERE DE DEUX PIECES

(30) Priorität: 16.10.2015 EP 15190209
(43) Veröffentlichungstag der Anmeldung: 22.08.2018
(73) Patentinhaber: Henkel AG & Co. KGaA, 40589 Düsseldorf (DE)
(72) Erfinder: WALTER, Pablo, 80801 München (DE); FRIEDRICH, Norman, 80636 München (DE); LÜTZEN, Hendrik, 80637 München (DE); GONZALEZ, Lina, 82008 München (DE); HÄRTIG, Thomas, 80796 München (DE)
(86) Internationale Anmeldenummer: PCT/EP2016/074678
(87) Internationale Veröffentlichungsnummer: WO 2017/064240

(56) Entgegenhaltungen:
- DE-A1-102010 009 562
- GB-A- 2 093 763
- JP-A- 2002 018 961
- JP-A- 2006 026 974
- US-A- 3 607 570
- US-A1- 2010 221 063
- VOLKOV S S: "Main methods and technological features of welding dissimilar plastics", WELDING INTERNATIONAL, TAYLOR & FRANCIS, ABINGDON, GB, Bd. 22, Nr. 3, 1. März 2008 (2008-03-01), Seiten 193-197, XP001550012, ISSN: 0950-7116, DOI: 10.1080/09507110802065561

## Beschreibung

Die vorliegende Erfindung betrifft ein Verfahren zum stoffschlüssigen Fügen von zwei Werkstücken aus artungleichen thermoplastischen Polymeren unter Zuhilfenahme einer Verbindungsschicht. Stoffschlüssige Fügeverfahren sind für die Verbindung von Kunststoffen im Stand der Technik lange bekannt. Einerseits können derartige Werkstücke mittels einer Klebeschicht miteinander verklebt werden. Alternativ oder zusätzlich können Schweißtechniken oder Mehrkomponentenspritzgießtechniken zum Einsatz kommen, um die Werkstücke miteinander zu verbinden.

Der Einsatz von Schweißtechniken zur Verbindung von Kunststoffen ist beispielsweise in der DE3823817C1 offenbart. Das hier beschriebene Verfahren zum Verbinden von Formkörpern aus polymeren Materialien sieht vor, dass die Fügeflächen der Formkörper von außen aufgeschmolzen und unter Anwendung von Pressdruck miteinander verschweißt werden.

Ein weiteres Verfahren zum Verbinden von Formteilen aus artungleichen Thermoplasten offenbart die DE102012004385A1, wobei die Fügeflächen der zu schweißenden Formteile aus den unterschiedlichen Thermoplasten zunächst mittels Plasmaprozessen behandelt und/oder beschichtet werden. Erfindungsgemäß werden die funktionalisierten Formteile anschließend einem geeigneten Schweißprozess zugeführt, in welchem die Formteile durch Wärmezufuhr im Bereich der funktionalisierten Fügeflächen plastifiziert und dauerhaft dicht verbunden werden. Ein ähnliches Verfahren offenbart die DE102010009562A1.

Im Unterschied dazu offenbart die DE4242059A1 ein Verfahren zum Verbinden von Kunststoff-Formkörpern mit einer weiteren Kunststoffkomponente, wobei eine Zwischenschicht auf eine der Fügeflächen aufgebracht wird, wonach unter Wärmezufuhr eine flächige Verschweißung zwischen den Formkörpern und der weiteren Kunststoffkomponente erfolgt, und wobei thermoplastische Materialien wie Polyolefine(Polypropylen oder Polyethylen) zum Einsatz kommen. Die Erfindung sieht zur Bereitstellung einer recyclingfreundlichen Verbindung eine Verwendung von Kunststoffkomponenten und Zwischenschicht auf gleicher Werkstoffbasis vor.

Ein ähnliches Verfahren zum stoffschlüssigen Fügen von mindestens zwei Werkstücken, die aus thermodynamisch unverträglichen Kunststoffen bestehen offenbart auch die DE102006054936A1, wobei auf eine Randschicht mindestens eines der zu fügenden Werkstücke ein Klebschweißzusatzstoff, der mit den Werkstücken mindestens teilweise thermodynamisch verträglich oder vom Monomeraufbau mit diesen identisch ist, aufgebracht wird und wobei anschließend die Randschicht so weit erwärmt wird, dass die Werkstücke nach dem Ende der Erwärmung eine stoffschlüssige Verbindung miteinander eingehen.

Aufgabe der Erfindung ist es, ein verbessertes Verfahren zum stoffschlüssigen Fügen von zwei Werkstücken aus artungleichen thermoplastischen Polymeren unter Zuhilfenahme einer Verbindungsschicht aufzuzeigen.

Diese Aufgabe wird gelöst durch die Merkmale des Anspruchs 1.

Vorteilhafte Ausgestaltungen der Erfindung sind mit den abhängigen Ansprüchen angegeben. Grundgedanke der Erfindung ist ein Verfahren zum stoffschlüssigen Fügen zweier Werkstücke aus artungleichen thermoplastischen Polymeren gemäß Anspruch 1.

Für das Schweißen von Kunststoffen kann allgemein das Verständnis der DIN 1910-3:1977-09 angewendet werden. Mithin kann darunter ein stoffschlüssiges Verbinden von thermoplastischen Kunststoffen unter Zuhilfenahme von Wärme oder/und Druck verstanden werden. Die Erwärmung kann beispielsweise auf Basis von Kontakterwärmung (Schweißen durch festen Körper), Konvektionserwärmung (Schweißen durch Warmgas), Strahlungserwärmung (Schweißen durch Strahl) und Erwärmung durch Reibung (Schweißen durch Bewegung) sowie das Schweißen durch elektrischen Strom erfolgen.

Unter einer Randschicht kann erfindungsgemäß ein zu fügender Oberflächenbereich eines Werkstückes verstanden werden, welches im Bereich der späteren Fügezone angeordnet ist.

Erfindungsgemäß kann mit dem Verfahren ein Verbundwerkstück bereitgestellt werden, wobei eine Gestaltung derart denkbar ist, dass eine erste Fügezone zwischen erstem Werkstück und Primer sowie eine zweite Fügezone zwischen Primer und zweitem Werkstück ermöglicht wird. Gleichwohl ist eine Gestaltung derart denkbar, dass eine Gesamtfügezone zwischen erstem Werkstück, Primer sowie dem zweitem Werkstück ermöglicht wird.

Durch das erfindungsgemäße Verfahren kann insbesondere eine verbesserte Verbundfestigkeit erreicht werden.

Erfindungsgemäß kommen zwei Werkstücke aus artungleichen thermoplastischen Polymeren zur Anwendung. Dabei sind unter artungleichen thermoplastischen Polymeren vorzugsweise solche thermoplastische Polymere zu verstehen, die mittels konventioneller Schweißverfahren schwer und/oder unzureichend verbunden werden können. Anders als artgleiche thermoplastische Polymere können beispielsweise Unterschiede in der Schmelztemperatur, der Schmelzviskosität und der Molekularstruktur der Polymere zu einer Unverträglichkeit führen. Neben einer chemischen Unverträglichkeit können auch unterschiedliche physikalische Eigenschaften zu einem Versagen einer zunächst gut anmutenden Schweißnaht führen. Unterscheiden sich die thermischen Ausdehnungen der beiden Polymere kann es zu keiner oder einer unzureichenden Verbundfestigkeit der Werkstücke kommen.

Die zu fügenden Kunststoffe oder die thermoplastischen Polymere, auf denen diese Kunststoffe basieren, können aus den folgenden genannten ausgewählt werden: Bei den Kunststoffen handelt es sich um thermoplastische Kunststoffe, wobei exemplarisch als geeignete Thermoplaste die folgenden genannt werden: Polyoxyalkylene, Polycarbonate (PC), Polyester wie Polybutylenterephthalat (PBT) oder Polyethylenterephthalat (PET), Polyolefine wie Polyethylen oder Polypropylen, Poly(meth)acrylate, Polyamide, vinylaromatische (Co)polymere wie Polystyrol, schlagzäh modifiziertes Polystyrol wie HI-PS, oder ASA-, ABS oder AES-Polymerisate, Polyarylenether wie Polyphenylenether (PPE), Polysulfone, Polyphenylensulfide (PPS), Polyurethane, Polylactide, halogenhaltige Polymerisate, wie Polyvinylchlorid (PVC), imidgruppenhaltige Polymere, Celluloseester, Siliconpolymere und thermoplastische Elastomere. Es können auch Mischungen unterschiedlicher Thermoplaste als Materialien für die Kunststoffformteile eingesetzt werden. Bei diesen Mischungen kann es sich um ein/oder mehrphasige Polymerblends handeln. Die miteinander zu verbindenden Formteile können aus identischen oder verschiedenen Thermoplasten bzw. Thermoplastblends bestehen, vorzugsweise weisen die Kunststoffe ein thermoplastisches Polymer als Hauptkomponete, insbesondere zu mehr als 40 Gew.-%, insbesondere zu mehr als 60 Gew.-%, vorzugsweise zu mehr als 70 Gew.-%, bevorzugt zu mehr als 90 Gew.-% aus diesem einen thermoplastischen Polymer, jeweils bezogen auf den Polymeranteil des Kunststoffes, insbesondere jeweils bezogen auf den gesamten Kunststoff (mit Füllstoffen).

Geeignet als zu fügende Kunststoffe sind zum Beispiel Polyamid-Kunststoffe. Bei dem Polyamid-Kunststoff handelt es sich vorzugsweise um ein thermoplastisches Polyamid. Zu den Thermoplasten auf Amid-Basis gehören beispielsweise Polyamid 6, ein Homopolymerisat aus epsilon-Caprolactam (Polycaprolactam); Polyamid 11, ein Polykondensat aus 11-Aminoundecansäure (Poly-11-aminoundecanamid); Polyamid 12, ein Homopolymerisat aus omega-Laurinlactam (Polylaurinlactam); Polyamid 6.6, ein Homopolykondensat aus Hexamethylendiamin und Adipinsäure (Polyhexamethylenadipamid); Polyamid 6.10, ein Homopolykondensat aus Hexamethylendiamin und Sebacinsäure (Polyhexamthylensebacamid); Polyamid 6.12 ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytrimethylhexamthylenterephthalamid), Poly(p-phenylenterephthalamid) oder Poly(m-phenylenterephthalamid) aus Phenylendiamin und Terephthalsäure, Polyphthalamide PPA aus verschiedenen Diaminen und Terephthalsäure sowie Gemische davon.

Optisch transparente Polyamide umfassen mikrokristalline Polyamide enthaltend lineare aliphatische Dicarbonsäuren und cycloaliphatische Diamine, amorphe Polyamide enthaltend lineare aliphatische Dicarbonsäuren und cycloaliphatische Diamine und optional Lactame bzw. Aminocarbonsäuren, amorphe Polyamide enthaltend Terephthalsäure und cycloaliphatische oder verzweigte aliphatische Diamine und optional Lactame bzw. Aminocarbonsäuren oder amorphe Polyamide enthaltend Isophthalsäure und cycloaliphatische oder lineare oder verzweigte aliphatische Diamine und optional Lactame bzw. Aminocarbonsäuren. Geeignete optisch transparente Polyamide sind beispielsweise Amide aus Dodecandisäure und einem Isomerengemisch des 4,4'-Bis(aminocyclohexyl)-methans, aus Terephthalsäure und dem Isomerengemisch des 2,2,4- und 2,4,4-Trimethylhexamethylendiamins, aus Dodecandisäure und dem Isomerengemisch des 3,3'-Dimethyl- 4,4'-bis(aminocyclohexyl)-methans, aus Laurinlactam, Isophthalsäure und dem Isomerengemisch des 3,3'-Dimethyl- 4,4'-bis(aminocyclohexyl)-methans oder aus Tetradecandisäure und dem Isomerengemisch des 3,3'-Dimethyl- 4,4'-bis(aminocyclohexyl)-methans oder aus epsilon-Caprolactam oder omega-Laurinlactam.

Bevorzugte Polyamide werden ausgewählt aus der Gruppe bestehend aus Polyamid 6, Polyamid 6.6, Polyamid 6.10, Polyamid 6.12, Polyamid 10.10, Polyamid 11, Polyamid 12, Polyamid 10.12, Polyphthalamiden, optischen transparenten Polyamiden oder Mischungen auf Basis dieser Polyamide. Besonders bevorzugte Polyamide sind ausgewählt aus Polyamid 6, Polyamid 6.6, Polyamid 12, Polyphthalamiden, optisch transparenten Polyamiden sowie deren Mischungen, insbesondere Polyamid 6, Polyamid 6.6 sowie deren Mischungen.

Poly(meth)acrylat ist ein synthetischer, bevorzugt transparenter, thermoplastischer Kunststoff. Bevorzugte Poly(meth)acrylate sind aus 50 bis 100 Gew.-%, insbesondere 70 bis 100 Gew.-% Acrylat und/oder Methacrylat aufgebaut, wobei die (Meth)acrylat-Einheiten vorzugsweise mit einem C1 bis C12 Alkylrest, insbesondere C1-C4, bevorzugt Methylrest verestert sind. Die Schreibweise Poly(meth)acrylat gibt an, dass das Polymer aus Acrylat und/oder Methacrylat aufgebaut ist. Bzw. die Schreibweise (Meth)acrylat gibt an, dass es sich sowohl um ein Acrylat als auch um ein Methacrylat handeln kann. Insbesondere bevorzugt ist das Poly(meth)acrylat ein Polymethylmethacrylat (PMMA, umgangssprachlich auch Acrylglas oder Plexiglas). Bevorzugte Polymethylmethacrylate sind aus 50 bis 100 Gew.-%, insbesondere 70 bis 100 Gew.-% Methylmethacrylat aufgebaut.

Als Comonomere für den Aufbau des Poly(meth)acrylats, insbesondere des Polymethylmethacrylats kommen in erster Linie (Meth)acrylsäure, insbesondere Acrylsäure, und deren Alkylester mit 1 bis 12 Kohlenstoffatomen, insbesondere 1 bis 4 Kohlenstoffatomen im Alkylrest, sowie Acryl- und/oder Methacrylnitril, Acryl- und/oder Methacrylamid, Styrol und/oder Maleinsäureanhydrid in Betracht. Bevorzugt sind thermoplastisch und thermoelastisch verformbare Kunststoffe. Bevorzugte thermoplastische Polymethylmethacrylat-Kunststoffe haben gewichtsmittlere Molmassen (Gewichtsmittel Mw) von größer 50000 g/mol, insbesondere größer 100000 g/mol. Vorzugsweise weisen die thermoplastische Poly(meth)acrylat-, insbesondere Polymethylmethacrylat-Kunststoffe eine gewichtsmittlere Molmassen (Gewichtsmittel Mw) von kleiner 2000000 g/mol, insbesondere kleiner 1000000 g/mol, bevorzugt kleiner 500000 g/mol auf. Besonders bevorzugte thermoplastische Poly(meth)acrylat-, insbesondere Polymethylmethacrylat-Kunststoffe haben gewichtsmittlere Molmassen (Gewichtsmittel Mw) von 50000 g/mol bis 250000 g/mol, z. B. ca. 100000 g/mol bis ca. 180000 g/mol für den Spritzguss.

Geeignete Polyolefin-Kunststoffe sind insbesondere thermoplastische Polyolefin-Kunststoffe. Ein Polyolefin-Kunststoff basiert auf polyolefinischen Polymeren, wie Homo- und Copolymere von alpha-Olefinen. Die polyolefinischen Polymere können ausgewählt werden aus der Gruppe bestehend aus Poly-alpha-Olefin-Homopolymeren auf Basis von Ethylen, Propylen und/oder Butylen, insbesondere Homopolymere aus Ethylen oder Propylen, und Poly-alpha-Olefin-Copolymere auf Basis von Ethen, Propen, 1-Buten, 1-Hexen und 1-Octen, insbesondere Ethylen/alpha-Olefin- und Propylen/alpha-Olefin-Copolymere, vorzugsweise Copolymere von Ethylen oder Propen mit 1-Buten, 1-Hexen, 1-Octen, oder einer Kombination davon. Insbesondere sind die Polyolefin-Kunststoffe ausgewählt aus Polyethylen- (insbesondere high-density/HD-Polyethylen-, medium-density/MD-Polyethylen-, low-density/LD-Polyethylen-, ultra high molecular weight/UHMW-Polyethylen- und linear low-density/LLD-Polyethylen-, vorzugsweise HD-Polyethylen-, MD-Polyethylen- oder LD-Polyethylen-) und Polypropylen-Kunststoffen. Besonders bevorzugt ist der Polyolefin-Kunststoff ein Polypropylen-Kunststoff.

Vorzugsweise haben die Polyolefin-Polymere, insbesondere Polypropylen-Polymere, eine gewichtsmittlere Molmasse (Gewichtsmittel Mw) von größer 10000 g/mol, insbesondere größer 20000 g/mol, bevorzugt größer 50000 g/mol, besonders bevorzugt größer 100000 g/mol. Vorzugsweise weisen die Polyolefin-Polymere, insbesondere Polypropylen-Polymere eine gewichtsmittlere Molmasse (Gewichtsmittel Mw) von kleiner 2000000 g/mol, insbesondere kleiner 1000000 g/mol, bevorzugt kleiner 500000 g/mol auf. Besonders bevorzugte Polyethylen-Polymere weisen eine gewichtsmittlere Molmasse (Gewichtsmittel Mw) von 50000 g/mol bis 1000000 g/mol, insbesondere von 200000 g/mol bis 500000 g/mol auf. Andere bevorzugte Polyethylen-Polymere (UHMW-PE-Polymere) weisen eine gewichtsmittlere Molmasse von größer 2000000 g/mol, insbesondere von 4000000 - 6000000 g/mol auf. Besonders bevorzugte Polyolefin-Polymere, insbesondere Polypropylen-Polymere haben gewichtsmittlere Molmassen (Gewichtsmittel Mw) von 50000 g/mol bis 250000 g/mol.

Geeignete Polyester-Kunststoffe sind ebenfalls an sich bekannt und in der Literatur beschrieben. Bevorzugte Polyester-Kunststoffe umfassen einen Polyester mit einem aromatischen Ring in der Hauptkette, der von einer aromatischen Dicarbonsäure herrührt. Der aromatische Ring kann auch substituiert sein, z. B. durch Halogen wie Chlor oder Brom oder durch C1-C4-Alkylgruppen wie Methyl-, Ethyl-, i- bzw. n-Propylgruppenoder n-, i- bzw. t-Butylgruppen. Die Polyester können durch Umsetzung von aromatischen Dicarbonsäuren, deren Estern oder anderer esterbildender Derivate hiervon mit aliphatischen Dihydroxyverbindungen in an sich bekannter Weise hergestellt werden. Als bevorzugte Dicarbonsäuren sind Naphthalindicarbonsäure, ortho-Phthalsäure, Terephthalsäure und Isophthalsäure oder deren Mischungen zu nennen. Bis zu 30 Mol-% der aromatischen Dicarbonsäuren können durch aliphatische oder cycloaliphatische Dicarbonsäuren wie Adipinsäure, Azelainsäure, Sebacinsäure, Dodecandisäure und Cyclohexandicarbonsäure ersetzt werden. Von den aliphatischen Dihydroxyverbindungen werden Diole mit 2 bis 8 Kohlenstoffatomen, insbesondere 1,2-Ethandiol, 1,4-Butandiol, 1,6-Hexandiol, 1,4-Hexandiol, 1,4-Cyclohexandimethylol und Neopentylglykol oder deren Mischungen bevorzugt. Als besonders bevorzugte Polyester sind Polyalkylenterephthalate, die sich von Alkandiolen mit 2 bis 6 C-Atomen ableiten, zu nennen.

Die Polyester-Kunststoffe werden vorzugsweise ausgewählt aus der Gruppe aus Polyethylenterephthalat (PET)-, Polyethylennaphthalat-, Polybutylennaphthalat- und Polybutylenterephthalat (PBT)-Kunststoffen sowie Mischungen dieser, insbesondere Polyethylenterephthalat (PET)- und Polybutylenterephthalat (PBT)-Kunststoffen sowie Mischungen dieser.

Geeignete Polycarbonat-Kunststoffe sind vorzugsweise thermoplastische Kunststoffe, die sich formal als Polyester der Kohlensäure beschreiben lassen. Die Herstellung von Polycarbonaten kann prinzipiell durch Polykondensation von Phosgen mit Diolen, bevorzugt Bisphenolen, erfolgen. Bevorzugte Polycarbonate sind aromatische Polycarbonate. Aromatische Polycarbonate sind solche, die mindestens aus einem aromatischen Monomer aufgebaut werden. Bevorzugte Polycarbonat-Kunststoffe sind Bisphenol, insbesondere Bisphenol A und Bisphenol F basierte Polycarbonat-Kunststoffe. Bei den Bisphenol basieren Polycarbonaten besteht bevorzugt die Diol-Komponete zu 50 Gew.-%, insbesondere zu 70 Gew.-%, vorzugsweise zu 90 Gew.-%, bevorzugt zu 100 Gew.-% aus Bisphenol, insbesondere Bisphenol A und/oder Bisphenol F.

Ebenfalls geeignete Kunststoffe sind Kunststoffe enthaltend mindestens ein vinylaromatisches Polymer, insbesondere Copolymer, aus Monomeren ausgewählt aus Styrol, Chlorstyrol, alpha-Methylstyrol und para-Methylstyrol. In untergeordneten Anteilen können die vinylaromatischen Copolymere (vorzugsweise nicht mehr als 20, insbesondere nicht mehr als 8 Gew.-%) auch Comonomere wie (Meth)acrylnitril oder (Meth)acrylsäureester am Aufbau beteiligt sein. Besonders bevorzugte vinylaromatische Polymere sind Polystyrol, Styrol-Acrylnitril-Copolymere (SAN), Polystyrolmethylmethacrylat (SMMA) und schlagzäh modifiziertes Polystyrol (HIPS = High Impact Polystyrene). Es versteht sich, dass auch Mischungen dieser Polymeren eingesetzt werden können.

Ganz besonders bevorzugte vinylaromatische Polymere sind ASA-, ABS- und AES-Polymerisate (ASA = Acrylnitril-Styrol-Acrylester, ABS = Acrylnitril-Butadien-Styrol, AES = Acrylnitril-EPDM-Kautschuk-Styrol). Diese schlagzähen vinylaromatischen Polymere enthalten mindestens ein kautschukelastisches Pfropfpolymerisat und ein thermoplastisches Polymerisat (Matrixpolymerisat). Als Matrixmaterial wird im Allgemeinen auf ein Styrol/AcrylnitrilPolymerisat (SAN) zurückgegriffen. Bevorzugt werden Pfropfpolymerisate verwendet, die als Kautschuk einen Dienkautschuk auf Basis von Dienen wie z. B. Butadien oder Isopren (ABS), einen Alkylacrylatkautschuk auf Basis von Alkylestern der Acrylsäure wie n-Butylacrylat und 2-Ethylhexylacrylat, einen EPDM-Kautschuk auf Basis von Ethylen, Propylen und einem Dien oder Mischungen dieser Kautschuke bzw. Kautschukmonomeren enthalten.

Das gewichtsmittlere Molekulargewicht dieser vinylaromatischen Polymere ist insbesondere von 1500 bis 2000000 g/mol, vorzugsweise von 70000 bis 1000000 g/mol.

Zudem kann der Kunststoff eine Mischung aus mindestens einem Polycarbonat und mindestens einem vinylaromatischen Polymer sein, bevorzugt den oben erwähnten. Vorzugsweise enthält diese Mischung mehr von einem Polycarbonat als von den vinylaromatischen Polymeren, insbesondere SMMA, SAN, ASA, ABS und/oder AES, vorzugsweise ABS. Bevorzugt ist das Verhältnis vom Polycarbonat, insbesondere vom aromatischen Polycarbonat, zum vinylaromatischen Polymer, insbesondere SMMA, SAN, ASA, ABS und/oder AES, vorzugsweise ABS, 1:1 bis 100:1, insbesondere 2:1 bis 50:1, vorzugsweise 3:1 bis 10:1

Geeignet zur Herstellung der Kunststoffe sind auch Polyoxyalkylenhomo- oder -copolymerisate, insbesondere (Co)polyoxymethylene (POM). Ganz allgemein weisen diese Polymere mindestens 50 Mol-% an wiederkehrenden Einheiten -CH2O in der Polymerhauptkette auf. Die Homopolymeren werden im Allgemeinen durch Polymerisation von Formaldehyd oder Trioxan hergestellt, vorzugsweise in Gegenwart von geeigneten Katalysatoren. Bevorzugt sind Polyoxymethylencopolymere und Polyoxymethylenterpolymerisate. Die bevorzugten Polyoxymethylen(co)polymere haben Schmelzpunkte von mindestens 150 °C und Molekulargewichte (Gewichtsmittelwert) Mw im Bereich von 5000 bis 200000, vorzugsweise von 7000 bis 150000 g/mol. Endgruppenstabilisierte Polyoxymethylenpolymerisate, die an den Kettenenden C-C Bindungen aufweisen, werden besonders bevorzugt.

Unter Polyarylenethern sind bevorzugt sowohl Polyarylenether an sich, Polyarylenethersulfide, Polyarylenethersulfone oder Polyarylenetherketone zu verstehen. Deren Arylengruppen können gleich oder verschieden sein und unabhängig voneinander einen aromatischen Rest mit 6 bis 18 C-Atomen bedeuten. Beispiele geeigneter Arylenreste sind Phenylen, Biphenylen, Terphenylen, 1,5-Naphthylen, 1 ,6-Naphthylen, 1,5-Anthrylen, 9,10-Anthrylen oder 2,6-Anthrylen. Hiervon werden 1,4-Phenylen und 4,4'-Biphenylen bevorzugt. Vorzugsweise sind diese aromatischen Reste nicht substituiert. Sie können jedoch einen oder mehrere Substituenten tragen.

Des Weiteren sind Polyurethane, Polyisocyanurate und Polyharnstoffe geeignete Materialien für die Herstellung der Kunststoffformteile. Weiche, halbharte oder harte, thermoplastische oder vernetzte Polyisocyanat-Polyadditionsprodukte, beispielsweise Polyurethane, Polyisocyanurate und/oder Polyharnstoffe, sind allgemein bekannt. Ihre Herstellung ist vielfältig beschrieben und erfolgt üblicherweise durch Umsetzung von Isocyanaten mit gegenüber Isocyanaten reaktiven Verbindungen bei allgemein bekannten Bedingungen. Bevorzugt wird die Umsetzung in Gegenwart von Katalysatoren und/oder Hilfsstoffen durchgeführt.

Als Isocyanate kommen die an sich bekannten aromatischen, arylaliphatischen, aliphatischen und/oder cycloaliphatischen organischen Isocyanate, bevorzugt Diisocyanate, in Frage.

Als gegenüber Isocyanaten reaktive Verbindungen können beispielsweise allgemein bekannte Verbindungen mit einem Molekulargewicht von 60 bis 10.000 g/mol und einer Funktionalität gegenüber Isocyanaten von 1 bis 8, bevorzugt 2 bis 6 eingesetzt werden (im Falle von thermoplastischen Polyurethanen Funktionalität ca. 2), beispielsweise Polyole wie Polyetherpolyole, Polyesterpolyole und Polyetherpolyesterpolyole mit einem Molekulargewicht von 500 bis 10.000 g/mol und/oder Diole, Triole und/oder Polyole mit Molekulargewichten kleiner als 500 g/mol.

Polylactide, also Polymere der Milchsäure, sind an sich bekannt und können nach an sich bekannten Verfahren hergestellt werden.

Neben Polylactid können auch Co-oder Blockcopolymere auf der Basis von Milchsäure und weiteren Monomeren verwendet werden. Meist werden lineare Polylactide eingesetzt. Es können aber auch verzweigte Milchsäurepolymerisate verwendet werden. Als Verzweiger können z. B. mehrfunktionelle Säuren oder Alkohole dienen.

Als geeignete halogenhaltige Polymerisate sind beispielsweise Polymerisate des Vinylchlorids zu nennen, insbesondere Polyvinylchlorid (PVC) wie Hart-PVC und Weich-PVC und Copolymerisate des Vinylchlorids wie PVC-U-Formmassen. Weiterhin kommen fluorhaltige Polymere in Betracht, insbesondere Polytetrafluorethylen (PTFE), Tetrafluorethylen-Perfluorpropylen-Copolymere (FEP), Copolymere des Tetrafluorethylens mit Perfluoralkylvinylether, Ethylen-Tetrafluorethylen-Copolymere (ETFE), Polyvinylidenfluorid (PVDF), Polyvinylfluorid (PVF), Polychlortrifluorethylen (PCTFE), und Ethylen-Chlortrifluorethylen-Copolymere (ECTFE).

Imidgruppenhaltige Polymere sind insbesondere Polyimide, Polyetherimide und Polyamidimide.

Geeignete Celluloseester sind etwa Celluloseacetat, Celluloseacetobutyrat und Cellulosepropionat.

Daneben kommen auch Siliconpolymere als Thermoplaste in Betracht. Geeignet sind insbesondere Siliconkautschuke. Dabei handelt es sich üblicherweise um Polyorganosiloxane, die zu Vernetzungsreaktionen fähige Gruppen aufweisen.

Schliesslich kann auch die Verbindungsklasse der thermoplastischen Elastomere (TPE) verwendet werden. TPE lassen sich wie Thermoplaste verarbeiten, haben jedoch kautschukelastische Eigenschaften. Geeignet sind TPE-Blockcopolymere, TPE-Pfropfcopolymere und segmentierte TPE-Copolymere aus zwei oder mehr Monomerbausteinen. Besonders geeignete TPE sind thermoplastische Polyurethan-Elastomere (TPE-U oder TPU), Styrol-Oligoblock-Copolymere (TPE-S) wie SBS (Styrol-ButadienStyrol-Blockcopolymer) und SEBS (Styrol-Ethylen-Butylen-Styrol-Blockcopolymer, erhältlich durch Hydrieren von SBS), thermoplastische Polyolefm-Elastomere (TPE-O), thermoplastische Polyester-Elastomere (TPE-E), thermoplastische Polyamid-Elastomere (TPE-A) und insbesondere thermoplastische Vulkanisate (TPE-V).

Erfindungsgemäß kommt bei dem Verfahren ein vorzugsweise thermoplastischer polymerer Primer als Verbindungsschicht zum Einsatz. Es kommen bevorzugt Primer zum Einsatz, die auf die jeweiligen Werkstücke abgestimmt sind und die vorzugsweise mindestens ein Polymer aus den folgenden polymeren Gruppen enthalten: Polyolefine, Polyamide, Polyacrylate, Polystyrole, Polycarbonate, Polyether.

Der vorzugsweise thermoplastische Primer zeichnet sich vorzugsweise dadurch aus, dass an den Grenzflächen starke intermolekulare Wechselwirkungen, Diffusionsprozesse bis hin zu chemischen Bindungen zu den Werkstücken zustande kommen können. Diese Wechselwirkungen können eine Verbesserung des stoffschlüssigen Fügeverfahrens ermöglichen. Zusätzlich unterscheiden sich die Werkstücke vorzugsweise durch ihre chemische Zusammensetzung von dem Primer.

Der Primer stellt ein Schweißhilfsmittel dar, welches vorzugsweise als eine Vorbehandlungsschicht auf mindestens einem der zu verschweißenden Oberflächen der Werkstücke im Bereich der späteren Fügezone (oder Schweißzone) aufgetragen wird. Der Primer ist nicht als Klebstoff, Reinigungsmittel oder ähnliches zu verstehen, vielmehr ist der Primer ein Hilfsmittel zum Schweißen, wodurch die Fügepartner in der Fügezone kompatibel zueinander gemacht werden und so in der Fügezone beim Fügen eine stoff- und kraftschlüssige Verbindung zwischen den zu verschweißenden Werkstücken entsteht.

Durch die Verwendung eines entsprechenden Primers, enthaltend ein erfindungsgemäßes Polymer, können die unterschiedlichen Kunststoffe beim Schweißen in der Fügezone kompatibilisiert werden und somit wird eine stabile und dauerhafte Verbindung erzielt. Ohne die Verwendung eines entsprechenden Primers konnten keine oder nur sehr geringe Festigkeiten der geschweißten Verbindung erzielt werden. Vorzugsweise weisen die gefügten Substrate eine Zugfestigkeit von mehr als 2 MPa, insbesondere mehr als 5 MPa, bevorzugt mehr als 7 MPa auf. Die Zugfestigkeit wird mittels einer Zuggeschwindigkeit von 5 mm/s bestimmt, wobei die zu vermessenden Proben mit einer Geometrie von 130 mm x 68 mm x 3 mm auf Stoß mit der 130 mm x 3 mm Oberfläche unter Verwendung der Verbindungschicht verschweißt wurden.

Als geeignete Polymere für den Primer kommen alle bereits oben genannten Polymere für die Kunststoffe in Betracht.

Neben dem erfindungsgemäßen Polymer kann der Primer vorzugsweise auch mindestens ein weiteres Polymer enthalten, welches von dem ersten erfindungsgemäßen Polymer unterschiedlich ist, insbesondere sich im Polymeraufbau unterscheidet. Das mindestens eine weitere Polymer ist vorzugsweise zu mindestens einem der beiden zu verschweißenden Kunststoffe und zum ersten erfindungsgemäßen Polymer im Primer kompatibel.

Der Gehalt des weiteren Polymeres am Primer ist bevorzugt 1 - 40 Gew.-%, insbesondere 5 - 30 Gew.-%, besonders bevorzugt 10 - 20 Gew.-%, jeweils bezogen auf das Gesamtgewicht des Primers. Der Gehalt des weiteren Polymeres am Polymergehalt des Primer ist bevorzugt 5 - 70 Gew.-%, insbesondere 20 - 60 Gew.-%, besonders bevorzugt 30 - 50 Gew.-%, jeweils bezogen auf den Gesamtpolymeranteil des Primers (Primer ohne Lösungsmittel und ohne Füllstoffe). In einer bevorzugten Ausführungsform enthält der Primer kein weiteres Polymer, sondern weist nur das erste erfindungsgemäße Polymer auf.

Neben dem ersten erfindungsgemäßen Polymer und dem weiteren Polymer kann der Primer auch ein Lösungsmittel, insbesondere ein organisches Lösungsmittel enthalten. Vorzugsweise enthält der Primer einen Lösungsmittelgehalt von 10 - 90 Gew.-%, insbesondere 50 - 85 Gew.-%, besonders bevorzugt 60 - 80 Gew.-%, jeweils bezogen auf das Gesamtgewicht des Primers.

Geeignete Lösungsmittel sind alle gängigen Lösungsmittel, wie zum Beispiel Wasser, Alkohole, Ketone, wie Mehylisobutylketon (MIBK) oder Cyclohexanon (CH), Ether, wie Diethylether oder Tetrahydrofuran (THF), Ester, wie Essigsäureethylester, oder Carbonate, wie Dimethyl- oder Dipropylcarbonat, Toluol, Xylol oder Gemische daraus.

In einer bevorzugten Ausführungsform enthält der Primer organische Lösungsmittel. Besonders bevorzugte Lösungsmittel sind Lösungsmittel mit einem Dampfdruck bei 20 °C von 1 bis 600 hPa, insbesondere 2 bis 200 hPa, besonders bevorzugt 5 bis 20 hPa. Lösemittel mit einem entsprechenden Dampfdruck haben sich besonders vorteilhaft dabei herausgestellt, die Blasenbildung in der Primerschicht beim Abdampfen zu minimieren bzw. zu verhindern. Insbesondere bevorzugt enthält der Primer ein Lösungsmittel ausgewählt aus Tetrahydrofuran, Mehylisobutylketon, Cyclohexanon und Gemische daraus, besonders bevorzugt enthält der Primer Tetrahydrofuran oder eine Mischung aus Mehylisobutylketon und Cyclohexanon. Wenn eine Mischung aus Mehylisobutylketon und Cyclohexanon als Lösungsmittel eingesetzt wird, enthält diese Mischung vorzugsweise 10-50 Gew.-%, insbesondere 20-35 Gew.-% Cyclohexanon, jeweils bezogen auf die gesamte Mischung an Lösungsmittel.

Wenn organische Lösungsmittel eingesetzt werden, beträgt der Gesamtpolymergehalt des Primers vorzugsweise 10 - 90 Gew.-%, insbesondere 15 - 50 Gew.-%, besonders bevorzugt 20 - 40 Gew.-%, jeweils bezogen auf das Gesamtgewicht des Primers. Der Gesamtpolymergehalt entspricht dem Gehalt aller im Primer verwendeten Polymere, insbesondere der erfindungsgemäßen Copolymere und der oben beschriebenen weiteren Polymere.

In einer anderen bevorzugten Ausführungsform liegt der Primer in Form einer wässrigen Dispersion oder Emulsion vor. In diesem Fall ist das erfindungsgemäße Polymer bzw., wenn vorhanden, die weiteren Polymere in Wasser emulgiert oder dispergiert. In diesem Fall beträgt der Gesamtpolymergehalt des Primers vorzugsweise 5 - 90 Gew.-%, insbesondere 20 - 70 Gew.-%, besonders bevorzugt 30 - 55 Gew.-%, jeweils bezogen auf das Gesamtgewicht des Primers. Für die wässrige Dispersion/Emulsion ist es vorteilhaft, dass die Polymerkomponente im Wesentlichen nur aus dem erfindungsgemäßen Polymer und dem gegebenenfalls vorhandenen oben genannten weiteren Polymer, insbesondere nur aus dem erfindungsgemäßen Polymer besteht. Unter dem Begriff "im Wesentlichen aus" wird erfindungsgemäß verstanden, wenn die Polymerkomponente zu mehr als 95 Gew.-%, vorzugsweise mehr als 97 Gew.-%, ganz besonders bevorzugt mehr als 99 Gew.-% aus der erfindungsgemäßen Polymer und dem gegebenenfalls vorhandenen oben genannten weiteren Polymer, insbesondere nur aus dem erfindungsgemäßen Polymer besteht.

In einer anderen bevorzugten Ausführungsform ist der Primer im Wesentlichen frei von Lösungsmitteln.

Neben dem erfindungsgemäßen Copolymer, den oben genannten weiteren Polymeren und einem Lösungsmittel kann der Primer weitere Komponenten enthalten, wie zum Beispiel Füllstoffe, (Fluores-zenz)-Farbstoffe und Pigmente, rheologische Hilfsmittel, Entschäumungshilfen, Benetzungshilfsmittel, Stabilisatoren oder Weichmacher. Abgesehen von Farbstoffen und Pigmenten ist der Primer jedoch vorzugsweise im Wesentlichen frei von weiteren Komponenten, insbesondere im Wesentlichen frei von jeglichen anderen Komponenten. Unter dem Begriff "im Wesentlichen frei von" wird erfindungsgemäß verstanden, wenn der Primer weniger als 5 Gew.-%, vorzugsweise weniger als 1 Gew.-%, ganz besonders bevorzugt weniger als 0,1 Gew.-% der jeweiligen Substanzen, insbesondere nicht die jeweiligen Substanzen enthalten.

In einer vorteilhaften Weiterbildung kommt ein Primer zum Einsatz, die derart ausgewählt und auf das Verfahren abgestimmt ist, dass das Auftragen auf eine erwärmte und/oder heiße Randschicht mit einer Temperatur, die kleiner ist, als die Zersetzungstemperatur des jeweiligen Primers keinen Einfluss auf die innere chemische Vernetzung des Primers hat.

Erfindungsgemäß ist vorgesehen, die erste Randschicht des ersten Werkstückes vorzuwärmen. Für das Vorwärmen können dem Fachmann bekannte und sich für den Einsatzzweck eignende Hilfsmittel und Techniken zum Einsatz kommen. Insbesondere eignet sich der Einsatz von Warmgas oder Plasma zur Vorwärmung. Denkbar ist auch eine Vorwärmung mittels Bestrahlung, insbesondere Infrarotstrahlung oder Laserstrahlung. Auch kann ein Heizelement oder ein beheiztes Werkzeug zum Einsatz kommen, um die erste Randschicht vorzuwärmen. Schließlich ist auch ein Vorwärmen in einem Ofen oder einem beheizten Raum denkbar. Denkbar ist eine Vorwärmung des gesamten Werkstückes und somit auch besagter Randschicht. Alternativ oder zusätzlich ist aber auch eine Vorwärmung lediglich der Randschicht selbst möglich.

In einer vorteilhaften Weiterbildung der Erfindung wird die erste Randschicht derart und so lange vorgewärmt, dass die Temperatur der ersten Randschicht oder einer Fügefläche der ersten Randschicht bei amorphen Kunststoffen vorzugsweise im Bereich zwischen dem extrapolierten Onset der Glasübergangstemperatur (T_{ei,g}) und der Stufenanfangstemperatur (T_{ini,z}) der Zersetzung des thermoplastischen Polymers, ab der der chemische Aufbau des thermoplastischen Polymers beschädigt wird, und ab der sich besagtes Polymer zu zersetzen beginnt, liegt. Bei teilkristallinen Kunststoffen liegt die Temperatur vorzugsweise im Bereich zwischen der Peakanfangstemperatur (T_{ini,m}) des Schmelzbereichs und der Stufenanfangstemperatur (T_{ini,z}) der Zersetzung des thermoplastischen Polymers. Vorzugsweise wird die erste Randschicht in allen Fällen derart und nur so lange vorgewärmt, dass sich das Werkstück allenfalls im Bereich der Randschicht selbst verformt.

Besagte Glasübergangstemperatur (T_{ei,g}) ist abhängig von einem zum Einsatz kommenden amorphen thermoplastischen Polymer des ersten Werkstücks, wobei der extrapolierte Onsetder Glasübergangstemperatur (T_{ei,g}) und auch die Glasübergangstemperatur (T_{m,g}) (midpoint temperature) gemäß DIN EN ISO 11357-1:2010-03 und DIN EN ISO 11357-2:2014-07 zu verstehen und auch für das jeweilige thermoplastische Polymer festzustellen sind. Die Peakanfangstemperatur (T_{ini,m}) ist abhängig von einem zum Einsatz kommenden teilkristallinen thermoplastischen Polymer des ersten Werkstücks, wobei die Peakanfangstemperatur (T_{ini,m}) des Schmelzbereichs und die Peakschmelztemperatur (T_{PM}) gemäß DIN EN ISO 11357-3:2013-04 zu verstehen und auch für das jeweilige thermoplastische Polymer festzustellen sind.

Auch die Stufenanfangstemperatur (T_{ini,z}) der Zersetzung ist abhängig vom zum Einsatz kommenden thermoplastischen Polymer des ersten Werkstücks, wobei die Stufenanfangstemperatur (T_{ini,z}) der Zersetzung sowie die Zersetzungstemperatur (T_{z}) gemäß DIN 51005:2005-08; DIN 51006:2005-07 zu verstehen und auch für das jeweilige thermoplastische Polymer festzustellen sind.

Die Vorwärmung kann dabei wie oberhalb beschrieben erfolgen, wobei es denkbar ist, die Temperatur der ersten Randschicht bei der Vorwärmung kontinuierlich zu erfassen, um mit dem erfassten Wert eine Regelung der Vorwärmung zu ermöglichen. Vorzugsweise erfolgt dies mittels einer berührungslosen Temperaturmessung (Pyrometrie), beispielsweise mittels eines Pyrometers.

Erfindungsgemäß ist vorgesehen, dass der Auftrag des Primers auf die vorgewärmte erste Randschicht erfolgt, wobei besagte erste Randschicht oder vorzugsweise eine Fügefläche der ersten Randschicht beim Auftrag des Primers bei amorphen Kunststoffen eine Temperatur im Bereich zwischen dem extrapolierten Onset der Glasübergangstemperatur (T_{ei,g}) und der Stufenanfangstemperatur (T_{ini,z}) der Zersetzung des thermoplastischen Polymers der ersten Randschicht aufweist. Bei der Verwendung von teilkristallinen Kunststoffen liegt die die Temperatur der ersten Randschicht oder eine Fügefläche der ersten Randschicht beim Auftrag des Primers erfindungsgemäß im Bereich zwischen der Peakanfangstemperatur (T_{ini,m}) und der Stufenanfangstemperatur (T_{ini,z}) der Zersetzung des thermoplastischen Polymers der ersten Randschicht. Besagte Temperaturen sind wie die oberhalb genannten Temperaturen zu verstehen und entsprechend für die jeweiligen Werkstoffe feststellbar.

In einer vorteilhaften Weiterbildung der Erfindung erfolgt der Auftrag des Primers auf die vorgewärmte erste Randschicht, wobei besagte erste Randschicht während des Auftrags des Primers eine Temperatur aufweist, die unterhalb der Zersetzungstemperatur (T_{z}) des Primers liegt. Unter der Zersetzungstemperatur (T_{z}) des Primers ist eine oberhalb genannte Zersetzungstemperatur (T_{z}) zu verstehen, welche entsprechend des jeweiligen für den Primer einzusetzenden Werkstoffes feststellbar ist.

In einer vorteilhaften Weiterbildung liegt der Abstand der Heizvorrichtung während der Vorwärmung zur Oberfläche des ersten Werkstück, insbesondere zur vorzuwärmenden ersten Randschicht, insbesondere des wärmeabgebenden Bereichs der Heizvorrichtung oder des wärmeaustretenden Bereichs der Heizvorrichtung oder der zur vorzuwärmenden wirksamen Oberfläche der Heizvorrichtung oder die hinsichtlich der ersten Randschicht gegenüberliegenden Bereich der Heizvorrichtung in einem Bereich von 0,5 mm bis 100 mm, vorzugsweise im Bereich von 1 mm bis 60 mm. Denkbar ist alternativ auch, dass eine Erwärmung durch und/oder bei Kontaktierung insbesondere der ersten Randschicht durch das Heizelement der Heizvorrichtung erfolgt.

Ein weiterer Vorteil ist die Auswahl des Werkstoffes für das erste Werkstück und die Einstellung der Verfahrensparameter auf das erste Werkstück derart, dass die erste Randschicht beim Vorwärmen aufgeschmolzen wird und dass beim Vorwärmen eine Schmelzeschicht in der ersten Randschicht erzeugt wird. Die Dicke der Schmelzeschicht liegt in einer bevorzugten Ausführungsform vorzugsweise im Bereich von 0,05 mm bis 6 mm, besonders bevorzugt im Bereich von 0,1 mm bis 3 mm. Eine derartige Schmelzeschicht kann zu einer besseren Adhäsion und/oder Diffusion und/oder Wechselwirkung der Moleküle führen und in Verbindung mit einem gewissen Fluss zu einer besseren Verbindungsschicht. Befindet sich die Grenzschicht des ersten Werkstücks im schmelzeflüssigen Zustand, kann es mit dem Primer zu Wechselwirkungen bis hin zu chemischen Bindungen kommen. Die Schmelzschicht kann insbesondere abhängig sein von der Bauteilgeometrie und der jeweiligen Bauteilauslegung. Vorzugsweise sind die Verfahrensparameter derart eingestellt und/oder gewählt, dass es zu keiner Verformung der Bauteile kommt. Bevorzugt ist ein Ausgleich von Temperaturunterschieden zwischen der Randschicht und dem aufzutragenden Primer durch geeignete Maßnahmen und/oder Verfahrensschritte vorzusehen. Dabei ist es insbesondere denkbar, den Primer vor dem Auftrag vorzuwärmen, um den Temperaturunterschied zwischen dem vorzugsweise thermoplastischen Primer und der ersten Randschicht zu reduzieren. Dies kann beispielsweise der schnellen Abkühlung der ersten Randschicht zwischen den Prozessschritten entgegenwirken.

Optional erfolgt vorzugsweise vor dem Schritt des Vorwärmens der ersten Randschicht eine Vorbehandlung der ersten Randschicht. Alternativ oder zusätzlich kann auch eine Vorbehandlung der zweiten Randschicht erfolgen. Als mögliche Vorbehandlung ist beispielsweise das Reinigen mittels eines Lösungsmittels oder eines beispielsweise alkalischen Kunststoffreinigers denkbar. Auch kann eine mechanische Vorbehandlung zum Einsatz kommen, insbesondere mittels Kratzen, Schmirgeln, Bürsten oder Strahlen. Denkbare chemische Vorbehandlungen sind insbesondere das Beizen oder der Einsatz reaktiver Gase. Darüber hinaus könnte sich der Einsatz einer thermischen, chemischen oder/und physikalischen Vorbehandlung als zweckmäßig erweisen, insbesondere mittels Gasflamme oder Plasmabogen. Alternativ oder zusätzlich kann eine elektrische Vorbehandlung mittels Corona-entladung, bei der die erste Randschicht und/oder die zweite Randschicht einer elektrischen Corona-entladung ausgesetzt wird damit an der entsprechenden Oberfläche polare Moleküle entstehen. Eine weitere Möglichkeit ist die Plasmabehandlung, vorzugsweise unter Einsatz einer Plasmadüse für die Vorbehandlung der Randschicht, insbesondere um eine Aktivierung und/oder Reinigung der entsprechenden Oberfläche zu erreichen. Gleichwohl kann sich auch eine Beschichtung mittels Plasma als zweckmäßig erweisen. Eine weitere Möglichkeit ist das Beflammen der Randschicht zur Erhöhung der Oberflächenspannung bei geeigneten Werkstücken. Eine weitere Art der Vorbehandlung ist die Bestrahlung mittels UV-Strahlen, Elektronenstrahlen, radioaktiven Strahlen oder mittels Laser. Schließlich kann die Vorbehandlung in Form einer Beschichtung erfolgen, insbesondere durch einen Anstrich oder einen Haftvermittler. Denkbar ist auch eine Vorbehandlung des ersten Werkstücks oder der Randschichten des ersten Werkstücks in einem größeren zeitlichen Abstand vor dem Vorwärmen. So ist beispielsweise denkbar, die Vorbehandlung schon im Rahmen des Fertigungsprozesses des ersten Werkstückes vorzunehmen, um im erfindungsgemäßen Verfahren ein vorbehandeltes Werkstück weiterverarbeiten zu können.

Der erfindungsgemäß auf die Vorwärmung folgende Auftrag des vorzugsweise thermoplastischen Primers ist auf unterschiedliche Art und Weise denkbar. Beispielsweise und insbesondere im industriellen Bereich ist der Auftrag mittels einer automatisierten Auftragshilfe, insbesondere mittels eines Dosierroboters denkbar. Selbiger kann dabei mit einem Nadel- und/oder einem Höhensensor ausgerüstet sein, um komplexe Dosierungen durchführen zu können. Auch kann der Auftrag des Primers mittels Spritzgießen erfolgen, indem das Material für den späteren Primer in einer Spritzgießmaschine plastifiziert und in die das erste Werkstück mit der ersten Randschicht enthaltenden Form unter Druck eingespritzt wird. Alternativ ist ein Folienauftrag denkbar, wobei in einem ersten Schritt mittels Folienblasen oder Flachfolienextrusion zunächst eine Folie aus dem Werkstoff des Primers hergestellt wird. Anschließend kann die Folie beispielsweise mittels eines Schneid- oder Stanzverfahrens in eine beliebige Form zugeschnitten und in einem weiteren Schritt nach dem genannten Vorwärmen auf die erste Randschicht aufgebracht werden. Hierbei hat sich der Einsatz von Folien/Platten mit einer Stärke im Bereich von 1 µm - 5000 µm als zweckmäßig erwiesen. Weitere denkbare Auftragsmöglichkeiten sind das Extrusionsschweißen, bei dem ein thermoplastischer Werkstoff Form eines Schweißdrahtes vorliegt oder in einem Extruder aufgeschmolzen und in Schmelze auf die erste Randschicht appliziert werden kann. Auch ist die Bereitstellung des Werkstoffes für den Primer in Form eines Schweißdrahtes möglich, um eine Applikation mittels Heißluftschweißen zu ermöglichen. Eine weite Möglichkeit ist das Aufbringen des Primers mittels eines Sprühverfahrens. Auch beim Aufbringen mittels Spritzgießens ist eine Vorbehandlung oder/und Vorwärmung und/oder lokal unterschiedliche Temperierung des Spritzgießwerkzeug möglich. Selbstverständlich sind auch andere, dem Fachmann bekannte und sich für den spezifischen Anwendungsfall eignende Auftragsarten denkbar.

Ein weiterer Vorteil ist die weitere Erwärmung oder Erwärmung der ersten Randschicht während des Auftrags des Primers, insbesondere um einen Temperaturabfall der ersten Randschicht zwischen dem Vorwärmen und dem Auftragen des Primers zu vermeiden. Dies kann durch den oben beschriebenen Verfahrensschritt zum Vorwärmen erfolgen, welcher der Einfachheit halber während des Auftrags fortgeführt werden kann. Alternativ oder zusätzlich ist eine zusätzliche Erwärmung insbesondere mittels eines weiteren Verfahrensschrittes möglich. So kann sich beispielsweise als zweckmäßig erweisen, ein simultanes Erwärmen der ersten Randschicht durchzuführen, beispielsweise mittels simultanen Bestrahlens der ersten Randschicht mit Strahlung, erzwungene Konvektion, Kontakterwärmung während des Auftrages, um einen Temperaturabfall der ersten Randschicht nach dem Vorwärmen zu vermeiden.

In einer vorteilhaften Weiterbildung wird der Primer derart aufgebracht, das Schicht an Primer mit einer Dicke im Bereich von 1 µm bis 5 mm, vorzugsweise im Bereich von 10 µm bis 3 mm auf der erste Randschicht angeordnet ist. Unter der Dicke des Primers ist dabei die Materialdicke des Primers auf der ersten Randschicht zu verstehen.

Ein weiterer Vorteil ist das Auftragen des Primers mittels einer Dosiervorrichtung auf die erste Randschicht unter Relativbewegung zwischen erster Randschicht und der Dosiervorrichtung, wobei mittels einer Heizvorrichtung die erste Randschicht, auf welche der Primer aufgetragen wird, unter Relativbewegung zwischen erster Randschicht und Heizvorrichtung, vor dem Auftrag des Primers vorgewärmt wird, wobei der Auftrag des Primers über die Dosiervorrichtung im vorgewärmten Zustand der ersten Randschicht erfolgt.

Hierbei hat es sich als besonders vorteilhaft erwiesen, dass die Heizvorrichtung bei der Vorwärmung an der ersten Randschicht mit einer Geschwindigkeit im Bereich von 10 mm/min bis 100 m/min, vorzugsweise im Bereich von 10 mm/min bis 30 m/min vorbeigeführt wird.

Ferner kann es von Vorteil sein, dass die Heizvorrichtung der Dosiervorrichtung vorzugsweise in einem definierten und konstanten Abstand voreilt. Insbesondere ist eine derartige Durchführung des Verfahrens von Vorteil, bei der der Primer mittels einer Dosiervorrichtung auf die erste Randschicht unter Relativbewegung von Dosiervorrichtung und erster Randschicht im Bereich von 10 mm/min bis 100 m/min, vorzugsweise im Bereich von 10 mm/min bis 30 m/min aufgetragen wird, wobei mittels einer Heizvorrichtung besagte Randschicht, auf welche der Primer aufgetragen wird, unter Relativbewegung von Heizvorrichtung und erster Randschicht vor dem Auftrag des Primers vorgewärmt wird, wobei die Heizvorrichtung der Dosiervorrichtung oder einer Düse der Dosiervorrichtung zum Auftragen des Primers in einem zeitlichen Abstand im Bereich von 0,1 s-10 s vorzugsweise simultan voreilt.

Hierbei hat es sich als besonders vorteilhaft erwiesen, eine Beschichtungseinheit bestehend aus Dosiervorrichtung und Heizvorrichtung einzusetzen. Unter einer Beschichtungseinheit kann dabei insbesondere eine Einheit verstanden werden, die eine feste Verbindung von Heizvorrichtung und Dosiervorrichtung vorsieht, so dass die Heizvorrichtung der Dosiervorrichtung in vorzugsweise einem definierten und konstanten Abstand bei der Relativbewegung voreilt, um sicherzustellen, dass die erste Randschicht unmittelbar vor dem Auftrag des Primers vorgewärmt wird. Selbstverständlich ist hierbei auch eine Einstellbarkeit des Abstandes oder bei konvektiver Vorwärmung das Einstellen des Volumenstroms bzw. Düsendurchmessers des Mediums, insbesondere durch geeignete mechanische, elektromechanische oder auch pneumatisch betriebene Stellmittel denkbar.

Andererseits kann unter der Beschichtungseinheit auch eine Heizvorrichtung und eine Dosiervorrichtung als zwei völlig voneinander getrennte oder separierte Baugruppen verstanden werden, die jedoch die gleiche oder im Wesentlichen die gleiche Relativbewegung hinsichtlich des Werkstückes eingehen, um sicherzustellen, dass der Auftragsort des Primers unmittelbar vor dem Auftrag des Primers vorgewärmt wird.

In einer vorteilhaften Weiterbildung gehen Heizvorrichtung und Dosiervorrichtung eine zwar im Wesentlichen gleiche primäre Relativbewegung oder Grundrichtung hinsichtlich des Werkstückes ein, jedoch erfährt zumindest eine von beiden genannten Vorrichtungen zusätzlich zur besagten primären Relativbewegung eine zusätzliche Relativbewegung hinsichtlich des Werkstückes. So können beispielsweise die Heizvorrichtung und/oder die Dosiervorrichtung neben der primären Relativbewegung, in der beispielsweise auch der Auftrag des Primers erfolgen kann, eine oder mehrere sekundäre Relativbewegungen eingehen. Beispielsweise kann insbesondere die Heizvorrichtung und/oder die Dosiervorrichtung eine um die primäre Relativbewegung kreisende oder mäanderförmige sekundäre Relativbewegung eingehen oder erfahren.

Dabei kann das Werkstück auf der einen Seite oder die Heizvorrichtung und Dosiervorrichtung oder beide Vorrichtungen zusammen als Beschichtungseinheit auf der anderen Seite bewegt werden. Dabei ist es möglich, dass die Heizvorrichtung und Dosiervorrichtung oder beide Vorrichtungen zusammen als Beschichtungseinheit auf der einen Seite bzw. das Werkstück auf der anderen Seite stillstehen oder jeweils mit dem sich bewegenden Teil in abweichende Richtung bewegt werden.

In einer vorteilhaften Weiterbildung erfolgt eine primäre Relativbewegung in einer Geschwindigkeit in einem Bereich von 10 mm/min bis 100 m/min, vorzugsweise im Bereich von 10 mm/min bis 30 m/min, so dass beispielsweise insbesondere auch durch geeignete Gestaltung der Heizvorrichtung möglichst kurze Verweilzeiten des Werkstückes innerhalb der Heizfläche der Heizvorrichtung ergeben, insbesondere in einem Bereich von 1 s-60 s. Unter besagter Heizfläche kann ein Bereich um die Heizvorrichtung verstanden werden, der einen Einfluss auf die Temperatur der betreffenden Randschicht im Sinne einer Temperaturerhöhung hat. So kann beispielsweise eine zu große Aufheizung und eine Werkstückschädigung oder Werkstückbeeinträchtigung vermieden werden.

Zudem kann es sich als vorteilhaft erweisen, insbesondere zur Anbindung der Dosiervorrichtung und/oder der Heizvorrichtung an in bestehende Fertigungslinien, die Heizvorrichtung mit einer Busschnittstelle auszustatten, insbesondere eines Profibus, oder einer Realtime-Ethernet-Schnittstelle.

Nach dem Aufbringen besagten Primers ist erfindungsgemäß vorgesehen, die zweite Randschicht mit dem Primer in Kontakt zu bringen. Hierbei kann sich eine Fixierung beider Werkstücke zueinander als zweckmäßig erweisen, insbesondere mittels dem Fachmann bekannter Spannvorrichtungen oder ähnlicher Hilfsmittel zur Fixierung.

Natürlich kann optional vor dem Schritt des In-Kontakt-Bringens der zweiten Randschicht mit dem Primer eine Vorbehandlung der zweiten Randschicht erfolgen. Dabei sind insbesondere alle oberhalb beschriebenen Techniken für eine Vorbehandlung denkbar. Denkbar ist auch eine Vorbehandlung der zweiten Werkstücke oder der Randschichten der zweiten Werkstücke in einem größeren zeitlichen Abstand vor dem In-Kontakt-Bringen. So ist beispielsweise denkbar, die Vorbehandlung schon im Rahmen des Fertigungsprozesses des zweiten Werkstückes vorzunehmen, um im erfindungsgemäßen Verfahren ein vorbehandeltes Werkstück weiterverarbeiten zu können. Die Vorbehandlung des zweiten Werkstücks kann auch den Auftrag eines Primers auf die zweite Randschicht beinhalten. Vorzugsweise wird hierfür ein thermoplastischer Primer auf die zweite Randschicht aufgebracht. Dabei ist vorzugsweise auch eine Vorwärmung der zweiten Randschicht vor dem Auftrag des vorzugsweise thermoplastischen Primers denkbar. Die obigen Ausführungen bezüglich des Primers oder das vorzugsweise thermoplastische Primer, welche für die erste Randschicht zum Einsatz kommen ergänzen insoweit die hier beschriebene Variante zur entsprechenden Vorbehandlung der zweiten Randschicht. Gleiches gilt insbesondere für das Vorwärmen der oder den Auftrag des vorzugsweise thermoplastischen Primers auf die zweite Randschicht selbst. Insoweit ergänzen die obigen Ausführungen die Offenbarung an dieser Stelle.

Erfindungsgemäß schließt sich an das oberhalb beschriebene In-Kontakt-Bringen von zweiter Randschicht und Primer ein Fügeprozess an, in dem die behandelten und/oder beschichteten Fügepartner durch Wärmezufuhr plastifiziert und vorzugsweise unter Einwirkung von Druck miteinander stoffschlüssig verbunden werden. Denkbar ist für diese stoffschlüssige Verbindung der zweiten Randschicht mit dem Primer der Einsatz einer Wärmezufuhr mittels Wärmeleitung, beispielsweise mittels Heizelementschweißen und/oder Wärmeimpulsschweißen; durch Reibung, insbesondere Ultraschall-, Reib-/Vibrationsschweißen oder Hochfrequenz-, Mikrowellen- oder Induktionsschweißen; durch Konvektion, wie beispielsweise Warmgasschweißen; mittels Strahlung, beispielsweise Infrarot-, Laserstumpf- oder Laserdurchstrahlschweißen oder auch durch Kombination zweier oder mehrerer dieser Techniken.

Ein weiterer Grundgedanke der Erfindung ist der Einsatz einer Beschichtungseinheit zum Auftragen eines Primers als Verbindungsschicht auf eine Randschicht eines Werkstückes, aufweisend eine Dosiervorrichtung zum Auftragen eines Primers sowie eine Heizvorrichtung zum Vorwärmen des Werkstückes vor dem Auftragen des Primers. Eine derartige Beschichtungseinheit eignet sich beispielsweise für oberhalb beschriebenes Verfahren. Die oberhalb beschriebenen vorteilhaften Ausführungsformen von Dosiervorrichtung, Heizvorrichtung und auch von der Beschichtungseinheit sind auch hier als bevorzugte Ausführungsformen anwendbar und ergänzen insoweit diesen vorrichtungsbezogenen Abschnitt.

Ein weiterer Vorteil ist die Verbindung der Dosiervorrichtung und der Heizvorrichtung derart, dass bei einer Relativbewegung zwischen Beschichtungseinheit und Werkstück ein definierter Abstand zwischen Dosiervorrichtung und Heizvorrichtung eingehalten wird. Dies kann beispielsweise durch die oberhalb im Rahmen des Verfahrens beschriebene Gestaltung der Beschichtungseinheit erfolgen. Insbesondere kann dabei eine feste Verbindung von Heizvorrichtung und Dosiervorrichtung vorgesehen werden, so dass die Heizvorrichtung der Dosiervorrichtung in einem festen Abstand bei der Relativbewegung voreilt, um sicherzustellen, dass die erste Randschicht unmittelbar vor dem Auftrag des Primers vorgewärmt wird. Selbstverständlich ist hierbei auch eine Einstellbarkeit des Abstandes, insbesondere durch geeignete mechanische, elektromechanische oder auch pneumatisch getriebene Stellmittel denkbar. Denkbar ist alternativ oder zusätzlich auch eine Vorwärmung des gesamten Werkstückes und somit auch besagter Randschicht vorzugsweise simultan zum Auftrag.

Die Erfindung ist beispielhaft mit den nachfolgenden Zeichnungen beschrieben. Dabei zeigt
Figur 1 eine Schnittansicht durch ein erstes Werkstück sowie eine Rückansicht einer Beschichtungseinheit zur Durchführung eines Teils des erfindungsgemäßen Verfahrens,
Figur 2 eine Seitenansicht der Beschichtungseinheit aus Figur 1 bei der Durchführung eines Teils des erfindungsgemäßen Verfahrens,
Figur 3 eine Seitenansicht einer Schweißvorrichtung bei der Durchführung eines Teils des erfindungsgemäßen Verfahrens.
Figur 4 eine Seitenansicht einer alternativen Schweißvorrichtung bei der Durchführung eines Teils des erfindungsgemäßen Verfahrens.

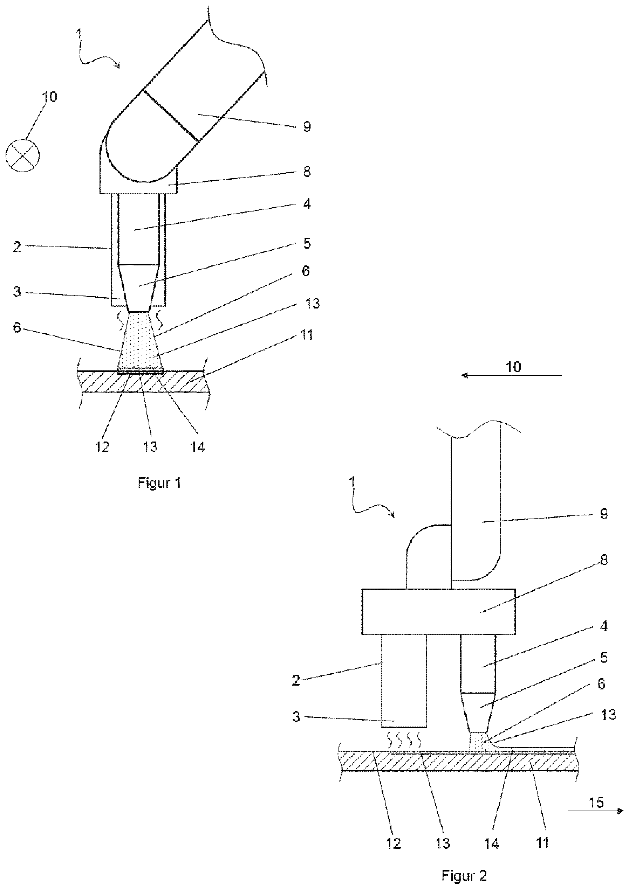

Figur 1 zeigt eine Schnittansicht durch ein erstes Werkstück 11 sowie eine Rückansicht einer Beschichtungseinheit 1 zur Durchführung eines Teils des erfindungsgemäßen Verfahrens zum stoffschlüssigen Fügen des abgebildeten ersten Werkstückes 11 mit einem nicht dargestellten zweiten Werkstück 21. Beide Werkstücke 11, 21 bestehen aus artungleichen thermoplastischen Polymeren. Das erste Werkstück 11 besteht aus einem teilkristallinen Polyethylen aufweisend eine erste Randschicht 12. Darunter ist ein Oberflächenbereich des ersten Werkstückes 11 zu verstehen, der mit dem nicht abgebildeten zweiten Werkstück 21 stoffschlüssig gefügt werden soll und welches mithin im Bereich der späteren Fügezone angeordnet ist. Die Randschicht 12 kann eine beliebige Form und Größe aufweisen und ist an den jeweiligen Anwendungsfall und natürlich an das zweite Werkstück 21 angepasst. Die Beschichtungseinheit 1 umfasst eine Dosiervorrichtung 4 zum Auftragen eines Primers 13 sowie eine Heizvorrichtung 2 zum Vorwärmen der ersten Randschicht 12 des Werkstückes 11, auf den der Primer 13 aufgetragen werden soll, unmittelbar vor dem Auftrag.

Die Heizvorrichtung 2 weist ein Heizaggregat 3, welches der zu vorzuwärmenden Oberfläche des Werkstückes 11 zugewandt ist, um die erste Randschicht 12 vorzuwärmen. Das Heizaggregat 3 ist der Düsenabschnitt eines nicht im Detail dargestellten Warmgasgerätes, aus welchem Warmgas zur Vorwärmung der ersten Randschicht 12 in Richtung letztgenannter strömen kann. Die Vorwärmzeit, also die Zeit, mit der das Warmgas auf die Randschicht strömt, liegt im vorliegenden Ausführungsbeispiel im Bereich von 1 s - 120 s, wobei die Temperatur des Warmgases vorzugsweise im Bereich von 300 °C- 450 °C liegt.

Die erste Randschicht 12 wird im gezeigten Ausführungsbeispiel derart und so lange vorgewärmt, dass die Temperatur der ersten Randschicht im Bereich zwischen der Peakanfangstemperatur (T_{ini,m}) als erste Grenze sowie der Stufenanfangstemperatur (T_{ini,z}) der Zersetzung als zweite Grenze liegt. Die Peakanfangstemperatur (T_{ini,m}) des zum Einsatz kommenden Polyethylens, bei der sich das thermoplastische Polymer in eine gummiartige bis zähflüssige Schmelze umwandelt, liegt bei 110°C. Die Stufenanfangstemperatur (T_{ini,z}) des Polyethylens, ab der der chemische Aufbau des Polyethylens beschädigt wird und ab der sich selbiges zu zersetzen beginnt, liegt bei 260°C. Vorzugsweise wird die erste Randschicht 12 dabei derart und so lange vorgewärmt, dass sich das Werkstück allenfalls im Bereich der Randschicht 12 selbst verformt.

Die Vorwärmung erfolgt dabei mittels einer Relativbewegung von Heizvorrichtung 2 und Werkstück 11. Im gezeigten Ausführungsbeispiel wird hierfür das Werkstück 11 von einem nicht dargestellten Roboterarm in der gezeigten Auftragsposition gehalten, wobei ein weiterer mehrachsiger Roboterarm 9 vorgesehen ist, an welchem über eine Haltevorrichtung 8 besagte Heizvorrichtung 2 montiert ist und mittels welchem die Heizvorrichtung 2 zum Vorwärmen der ersten Randschicht 12 in eine Bewegungsrichtung 10 relativ zum Werkstück 11 bewegbar ist. Die Vorschubgeschwindigkeit der Heizvorrichtung 2 relativ zum Werkstück 11 liegt im gezeigten Ausführungsbeispiel im Bereich von 10 mm/min - 100 m/min. Alternativ oder zusätzlich ist es jedoch auch denkbar, dass das Werkstück 11 insbesondere mittels oben angesprochenen, nicht abgebildeten Roboterarms relativ zu der Beschichtungsvorrichtung 1 bewegbar ist. Im gezeigten Ausführungsbeispiel liegt der Abstand des Heizelementes 3 von der Oberfläche des Werkstückes 11 im Bereich von 10 mm bis 40 mm. Alle Parameter sind derart aufeinander abgestimmt und an den Werkstoff des ersten Substrates angepasst, dass das Werkstück 11 in einem vorgewärmten Bereich 14 der ersten Randschicht 12 durch das Heizelement 3 aufgeschmolzen wird, wobei die erzeugte Schmelzeschichtdicke im vorgewärmten Bereich 14 im Bereich von 0,1 mm - 3 mm liegt. Die Heizvorrichtung 2 weist ferner ein nicht abgebildetes Pyrometer auf, um die Temperatur der ersten Randschicht bei der Vorwärmung kontinuierlich zu erfassen. Ferner ist eine nicht gezeigte Regelungseinheit vorgesehen, die mit dem erfassten Wert eine Regelung der Vorwärmung zu ermöglichen.

Die Dosiervorrichtung 4 ist ebenfalls über besagte Haltevorrichtung 8 an dem Roboterarm 9 montiert. Die Dosiervorrichtung 4 umfasst eine Auftragsdüse 5 zum Auftragen des Primers 13 auf die Randschicht 12 des Werkstückes 11, wobei der Auftrag des Primers 13 auch hier mittels einer Relativbewegung von Dosiervorrichtung 4 und Werkstück 11 erfolgt. Die Dosiervorrichtung 4 und insbesondere die Auftragsdüse 5 sind dabei derart gestaltet, dass einerseits unterschiedliche Primer 13 aufgetragen werden, andererseits jedoch auch unterschiedliche Auftragsarten gewählt werden können. So kann der Primer 13 als Raupe aufgetragen oder aufgesprüht werden, jedoch ist auch eine Applikation mittels Dünnstrahlsprühen wie abgebildet über einen Auftragsstrahl denkbar.

Zudem ist die Anordnung von Heizvorrichtung 2 und Dosiervorrichtung 4 derart gewählt, dass die Randschicht 12 auf den der Primer 13 aufgebracht wird, unmittelbar vor dem Auftrag dieser Primer 13 vorgewärmt wird. Die Beschichtungseinheit 1 ist dabei derart angeordnet und wird in der Bewegungsrichtung 10 derart relativ zum Werkstück 11 bewegt, dass sich das Heizelement 4 während der Vorwärmung des Werkstückes 11 in einem konstanten Abstand innerhalb des oben genannten Abstandsbereich von 10 mm bis 40 mm von der äußeren Oberfläche des Werkstückes 11, also der Randschicht 12, entfernt befindet. Zudem ist einerseits das Heizelement 3 derart gewählt und andererseits bewegt sich die Beschichtungseinheit 1 mit einer derartigen, vorzugsweise konstanten Geschwindigkeit in die Bewegungsrichtung 10 relativ zum Werkstück 11, dass sich die Randschicht 12 nur in eine bestimmte Zeit innerhalb der zur Erwärmung des Auftragsbereich wirksamen Fläche des Heizelementes 3 befindet. Die Beschichtungseinheit 1 wird dabei mit einer Vorschubgeschwindigkeit im Bereich von 10 mm/min - 100 m/min relativ zu dem in diesem Fall unbewegten Werkstück 11 bewegt. So wird mit Hilfe des Heizaggregates 3 die Randschicht 12 des Werkstücks 11 direkt vorgewärmt, um ein Aufschmelzen zu erreichen, wobei der vorgewärmte Bereich 14 eine Schmelzschichtdicke im Bereich von 0,1 mm - 3 mm aufweist. Im Nachgang erfolgt der Auftrag des Primers 13 auf den vorgewärmten Bereich 14, also unmittelbar auf das aufgeschmolzene Material. Der Abstand zwischen Dosiervorrichtung 4 und Heizvorrichtung 2 an der Haltevorrichtung 8 sowie die Geschwindigkeit der Beschichtungseinheit 1 in Bewegungsrichtung 10 sind dabei derart eingestellt, dass die Heizvorrichtung 2 oder vielmehr besagte zur Erwärmung wirksame Bereich des Heizaggregates 3 der Dosiervorrichtung 2 bei der Bewegung der Beschichtungseinheit 1 in die Bewegungsrichtung 10 im zeitlichen Abstand von hier im Bereich von 0,1 s - 10 s simultan voreilt. So kann eine Abkühlung des Auftragsbereichs nach dem Vorwärmen vermieden werden, so dass ein Auftrag des Primers 13 bei noch ausreichender Temperatur des vorgewärmten Bereichs 14 der Randschicht 12 erfolgen kann. Somit erfolgt der Auftrag des Primers 13 noch im vorgewärmten und vorzugsweise noch im aufgeschmolzenen Zustand des vorgewärmten Bereichs 14, was zu einer stoffschlüssigen Verbindung von vorgewärmten Bereich 14 und Primer 13 führt.

Figur 2 zeigt eine geschnittene Seitenansicht der Beschichtungseinheit 1 aus Figur 1 bei der Durchführung eines Teils des erfindungsgemäßen Verfahrens. Zu erkennen ist ebenfalls eine geschnittene Seitenansicht des ersten Werkstückes 11 aufweisend die erste Randschicht 12, bereichsweise besagten vorgewärmten Bereich 14 und der auf den vorgewärmten Bereich 14 aufgetragene Primer 13. Zu erkennen ist, dass sowohl Heizvorrichtung 2 mit dem Heizaggregat 3 als auch Dosiervorrichtung 4 mit der Auftragsdüse 5 über die Haltevorrichtung 8 zusammen an dem mehrachsigen Roboterarm 9 befestigt sind. Demnach werden Heizvorrichtung 2 und Dosiervorrichtung 4 als Einheit in Bewegungsrichtung 10 bewegt, wobei Heizvorrichtung 2 und Dosiervorrichtung 4 fest und während des Verfahrens hinsichtlich ihrer Lage zueinander fixiert sind, um bei einer Relativbewegung zwischen Beschichtungseinheit 1 und Werkstück 11 einen definierten Abstand zwischen Heizvorrichtung 2 und Dosiervorrichtung 4 einhalten zu können. Dabei kann die Haltevorrichtung 8 zudem derart gestaltet sein, dass einerseits eine Fixierung besagter Bauelemente für das Verfahren ermöglicht werden kann, andererseits beispielsweise über einen Linearantrieb oder ähnliche mechanische Hilfsmittel der Abstand zwischen Heizvorrichtung 2 und Dosiervorrichtung 4 veränderbar ist, insbesondere um die Beschichtungseinheit 1 beispielsweise bei einer Änderung des Werkstückes 11 anzupassen und flexibel einsetzbar zu gestaltet.

Selbstverständlich ist wie oberhalb angesprochen auch eine alternative oder zusätzliche Bewegung des Werkstückes beispielsweise in eine Bewegungsrichtung 15 möglich. Durch die konstante Bewegung der Versiegelungseinheit 1 und den definierten Abstand zwischen Heizvorrichtung 2 und Dosiervorrichtung 4 wird beispielsweise mit den obengenannten Parametern der Primer 13 mittels des Auftragsstrahls 6 über die Auftragsdüse 5 im noch vorgewärmten und vorzugsweise noch im aufgeschmolzenen Zustand des vorgewärmten Bereichs 14 aufgetragen, was zu einer stoffschlüssigen Verbindung von vorgewärmten Bereich 14 und Primer 13 führt.

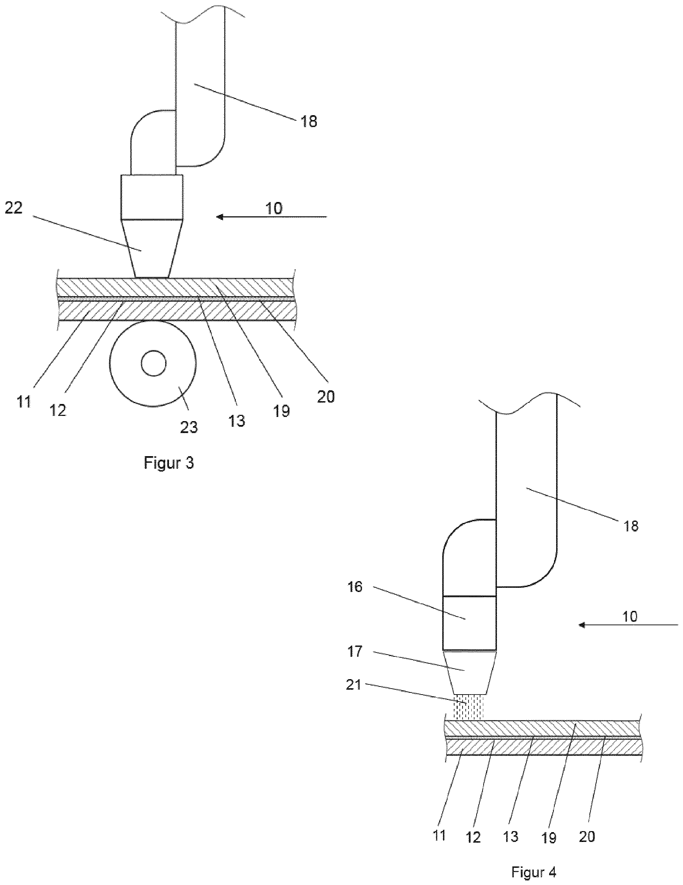

Figur 3 zeigt weitere Seitenansicht einer Schweißvorrichtung 16 bei der Durchführung eines weiteren Teils des erfindungsgemäßen Verfahrens. Figur 3 zeigt weiterhin das erste Werkstück 11 mit dem Primer 13 auf der ersten Randschicht 12. Zu erkennen ist hier auch das zweite Werkstück 19 aus einem thermoplastischen Polymer, aufweisend eine zweite Randschicht 20. Dabei ist festzustellen, dass das thermoplastische Polymer des zweiten Werkstückes 19 artungleich hinsichtlich des ersten Werkstückes 11 ist. Als zweites Werkstück 19 kommt im gezeigten Ausführungsbeispiel ein Polyester zum Einsatz. Das zweite Werkstück 19 ist dabei derart mit dem ersten Werkstück 11 in Kontakt gebracht worden, dass die mit dem Primer 13 versehene erste Randschicht 12 unmittelbar gegenüberliegend zur zweiten Randschicht 20 angeordnet ist. Die beiden Randschichten 12, 20 werden somit durch den auf der ersten Randschicht 12 aufgebrachten Primer 13 voneinander getrennt. Die beiden Werkstücke 11, 19 sind in ihrer Lage zueinander fixiert. Dies kann durch nicht abgebildete Klammern erfolgen, um ein Verrutschen der Werkstücke 11, 19 zu vermeiden. Im gezeigten Ausführungsbeispiel ist die Schweißvorrichtung 16 als Ultraschallschweißvorrichtung gestaltet und umfasst eine Sonotrode 22 und ein Gegenlager 23. Die Sonotrode 22 wird über einen nicht dargestellten Ultraschallgenerator mit einer Ultraschallschwingung in einem Frequenzbereich von beispielsweise 15 kHz bis 40 kHz versorgt. Der Abstand zwischen Sonotrode 22 und Gegenlager 23 ist variabel, um Werkstücke 11, 19 mit unterschiedlichen Gesamtdicken verschweißen zu können. Mittels der Schweißvorrichtung 16 kann ein stoffschlüssiges Verbinden der mit dem Primer 13 versehenen ersten Randschicht 12 mit der zweiten Randschicht 20 ermöglicht werden. Die Verschweißung erfolgt getaktet oder kontinuierlich mittels einer Relativbewegung von Schweißvorrichtung 16 und den verbundenen Werkstücken 11, 19. Im gezeigten Ausführungsbeispiel wird auch hier wieder das Werkstück 11 zusammen mit dem daran fixierten zweiten Werkstück 19 von einem nicht dargestellten Roboterarm in der gezeigten Auftragsposition gehalten, wobei ein zweiter, mehrachsiger Roboterarm 18 vorgesehen ist, an welchem besagte Schweißvorrichtung 16 mit der Sonotrode 22 und dem Gegenlager 23 montiert ist und mittels welchem die Schweißvorrichtung 16 in die Bewegungsrichtung 10 bewegbar ist. Die Vorschubgeschwindigkeit der Schweißvorrichtung 16 relativ zu den Werkstücken 11, 19 liegt im gezeigten Ausführungsbeispiel im Bereich von 10 mm/min - 100 m/min. Alternativ oder zusätzlich ist es jedoch auch denkbar, dass die Werkstücke 11, 19 insbesondere mittels oben angesprochenen, nicht abgebildeten Roboterarms relativ zu der Schweißvorrichtung 16 bewegbar ist. Alle Parameter sind derart aufeinander abgestimmt und die Werkstücke 11, 19 sowie der Primer 13 derart aufeinander angepasst, dass sowohl das erste Werkstück 11 im Bereich der mit dem Primer 13 versehenen ersten Randschicht 12, als auch das zweite Werkstück 19 im Bereich der zweiten Randschicht 12 durch die Schweißvorrichtung 16 direkt oder auch indirekt aufgeschmolzen werden, was zu einer stoffschlüssigen Verbindung zwischen der mit dem Primer 13 ausgerüsteten ersten Randschicht 12 und der zweiten Randschicht 20 führt. Alternativ zu der genannten als Ultraschallschweißvorrichtung ausgestaltete Schweißvorrichtung 16 kann auch insbesondere eine Vorrichtung zum Einsatz kommen, die sich zum Vibrationsschweißen und/oder Heizelementschweißen eignet, um ein stoffschlüssiges Verbinden der mit dem Primer 13 versehenen ersten Randschicht 12 mit der zweiten Randschicht 20 zu ermöglichen.

Figur 4 zeigt Seitenansicht einer alternativen Schweißvorrichtung 16 bei der Durchführung des bereits beschriebenen Teils des erfindungsgemäßen Verfahrens. Auch hier ist das zweite Werkstück 19 derart mit dem ersten Werkstück 11 in Kontakt gebracht worden, dass die mit dem Primer 13 versehene erste Randschicht 12 unmittelbar gegenüberliegend zur zweiten Randschicht 20 angeordnet ist. Im gezeigten Ausführungsbeispiel ist das zweite Werkstück 19 ein für einen Laserstrahl transparenter Fügepartner und das mit dem Primer 13 ausgerüstete erste Werkstück 11 ein absorbierende Fügepartner. Die Schweißvorrichtung 16 weist eine nicht gezeigte Laserlichtquelle auf sowie eine Fokussieroptik 17 für einen Laserstrahl 21, welcher dem stoffschlüssiges Verbinden der ersten mit dem Primer 13 versehenen ersten Randschicht 12 mit der zweiten Randschicht 20 dient. Alternativ kann anstelle des Laserlichtes auch polychromatischem Licht mindestens eines IR-Strahlers zum Einsatz kommen. Vorteil des hier zum Einsatz kommenden Laserlichtes ist die minimale und gut kontrollierbare Wärmeeinflusszone, so dass eine thermische Schädigung der unmittelbaren Umgebung verhindert werden kann. Die Bestrahlung der Randschichten 12, 20 und des Primers 13 durch den Laserstrahl 21 erfolgt mittels einer Relativbewegung von Schweißvorrichtung 16 und den verbundenen Werkstücken 11, 19. Im gezeigten Ausführungsbeispiel wird auch hier wieder das Werkstück 11 zusammen mit dem daran fixierten zweiten Werkstück 19 von einem nicht dargestellten Roboterarm in der gezeigten Auftragsposition gehalten, wobei ein zweiter, mehrachsiger Roboterarm 18 vorgesehen ist, an welchem besagte Schweißvorrichtung 16 montiert ist und mittels welchem die Schweißvorrichtung 16 zum Bestrahlen der zweiten Randschicht 20 und der mit dem Primer 13 ausgerüsteten ersten Randschicht 12 in die Bewegungsrichtung 10 bewegbar ist. Die Vorschubgeschwindigkeit der Schweißvorrichtung 16 relativ zum Werkstück 11 liegt auch hier wieder im Bereich von 10 mm/min - 100 m/min. Alternativ oder zusätzlich ist auch hier wieder eine Bewegung der Werkstücke 11, 19 denkbar. Alle Parameter sind derart aufeinander abgestimmt und die Werkstücke 11, 19 sowie der Primer 13 derart aufeinander angepasst, dass sowohl das erste Werkstück 11 im Bereich der mit dem Primer 13 versehenen ersten Randschicht 12, als auch das zweite Werkstück 19 im Bereich der zweiten Randschicht 12 durch den Laserstrahl 21 direkt oder auch indirekt aufgeschmolzen werden, was zu einer stoffschlüssigen Verbindung zwischen der mit dem Primer 13 ausgerüsteten ersten Randschicht 12 und der zweiten Randschicht 20 führt.

**Bezugszeichenliste:**

| | | | |
|---|---|---|---|
| 1 | Beschichtungseinheit | 13 | Primer |
| 2 | Heizvorrichtung | 14 | vorgewärmter Bereich |
| 3 | Heizaggregat | 15 | Zweite Bewegungsrichtung |
| 4 | Dosiervorrichtung | 16 | Schweißvorrichtung |
| 5 | Auftragsdüse | 17 | Fokussieroptik |
| 6 | Auftragsstrahl | 18 | Zweiter Roboterarm |
| 8 | Haltevorrichtung | 19 | Zweites Werkstück |
| 9 | Roboterarm | 20 | Zweite Randschicht |
| 10 | Bewegungsrichtung | 21 | Laserstrahl |
| 11 | Werkstück | 22 | Sonotrode |
| 12 | Erste Randschicht | 23 | Gegenlager |

## Patentansprüche

1. Verfahren zum stoffschlüssigen Fügen zweier Werkstücke (11, 19) aus artungleichen thermoplastischen Polymeren unter Zuhilfenahme eines vorzugsweise thermoplastischen polymeren Primers (13) als Verbindungsschicht, beinhaltend die folgenden Schritte.
• Bereitstellen eines ersten Werkstückes (11) aus einem thermoplastischen Polymer aufweisend eine erste Randschicht (12),
• Bereitstellen eines zweiten Werkstückes (19) aus einem thermoplastischen Polymer aufweisend eine zweite Randschicht (20), wobei das thermoplastische Polymer artungleich hinsichtlich des thermoplastischen Polymers des ersten Werkstückes (11) ist,
• Vorwärmen der ersten Randschicht (12),
• Auftragen des Primers (13) auf die vorgewärmte erste Randschicht (12),
• In Kontakt bringen der mit dem Primer (13) versehenen ersten Randschicht (12) mit der zweiten Randschicht (19),
• Stoffschlüssiges Verbinden der ersten Randschicht (12) mit der zweiten Randschicht (19), **dadurch gekennzeichnet, dass** die vorgewärmte erste Randschicht (12) während des Auftragens des Primers (13) eine Temperatur im Bereich zwischen dem extrapolierten Onset der Glasübergangstemperatur für amorphe Kunststoffe oder der Peakanfangstemperatur des Schmelzbereichs für teilkristallinen Kunststoffe und der Stufenanfangstemperatur der Zersetzung des thermoplastischen Polymers der ersten Randschicht (12) aufweist.

2. Verfahren nach Anspruch 1, **dadurch gekennzeichnet, dass** die erste Randschicht (12) derart und so lange vorgewärmt wird, dass die Temperatur der ersten Randschicht (12) im Bereich zwischen dem extrapolierten Onset der Glasübergangstemperatur für amorphe Kunststoffe oder der Peakanfangstemperatur des Schmelzbereichs für teilkristallinen Kunststoffe und der Stufenanfangstemperatur der Zersetzung des thermoplastischen Polymers der ersten Randschicht (12) liegt.

3. Verfahren nach einem der Ansprüche 1 oder 2, **dadurch gekennzeichnet, dass** die Temperatur der ersten Randschicht (12) bei der Vorwärmung kontinuierlich erfasst wird, um mit dem erfassten Wert eine Regelung der Vorwärmung zu ermöglichen.

4. Verfahren nach einem der vorhergehenden Ansprüche, **dadurch gekennzeichnet, dass** die vorgewärmte erste Randschicht (12) während des Auftragens des Primers (13) eine Temperatur aufweist, die unterhalb der Zersetzungstemperatur des Primers (13) liegt.

5. Verfahren nach einem der vorhergehenden Ansprüche, **dadurch gekennzeichnet, dass** die erste Randschicht (12) während des Auftrags weiter erwärmt wird, um einen Temperaturabfall der ersten Randschicht (12) vor dem Auftragen des Primers (13) zu vermeiden.

6. Verfahren nach einem der vorhergehenden Ansprüche **dadurch gekennzeichnet, dass** vor dem Vorwärmen der ersten Randschicht (12) eine Vorbehandlung der ersten Randschicht (12) mittels Corona-Entladung und/oder Plasmabogen und/oder Beflammen und/oder Bestrahlung und/oder eine chemische und/oder mechanische Vorbehandlung der ersten Randschicht (12) erfolgt.

7. Verfahren nach einem der vorhergehenden Ansprüche, **dadurch gekennzeichnet, dass** beim Vorwärmen eine Schmelzeschicht in der ersten Randschicht (12) erzeugt wird, die vorzugsweise eine Dicke im Bereich von 0,05 mm bis 6 mm, vorzugsweise im Bereich von 0,1 mm bis 5 mm aufweist.

8. Verfahren nach einem der vorhergehenden Ansprüche, **dadurch gekennzeichnet, dass** für die Vorwärmung der ersten Randschicht (12) eine Heizvorrichtung (2) zum Einsatz kommt, wobei die Vorwärmung der ersten Randschicht (12) unter Relativbewegung im Bereich von 10 mm/min bis 100 m/min, vorzugsweise im Bereich von 10 mm/min bis 30 m/min zwischen ersten Werkstück (11) Heizvorrichtung (2) erfolgt.

9. Verfahren nach einem der vorhergehenden Ansprüche, **dadurch gekennzeichnet, dass** der Primer (13) mittels einer Dosiervorrichtung (4) auf die erste Randschicht (12) unter Relativbewegung von 10 mm/min bis 100 m/min, vorzugsweise im Bereich von 10 mm/min bis 30 m/min zwischen ersten Werkstück (11) und Dosiervorrichtung (4,) aufgetragen wird und dass mittels einer Heizvorrichtung (2) die Randschicht (12), auf welche der Primer (13) aufgetragen wird, unter Relativbewegung zwischen dem ersten Werkstück (11) und der Heizvorrichtung (2) vor dem Auftrag des Primers (13) erwärmt wird, wobei die Heizvorrichtung (2) der Dosiervorrichtung (4) oder einer Düse (5) der Dosiervorrichtung (4) zum Auftragen des Primers (13) in einem zeitlichen Abstand im Bereich von 0,1-10 s simultan voreilt.

10. Verfahren nach einem der vorhergehenden Ansprüche, **dadurch gekennzeichnet, dass** für die Vorwärmung der ersten Randschicht (12) eine Heizvorrichtung (2) zum Einsatz kommt, wobei der Abstand der Heizvorrichtung (2) während der Vorwärmung zur vorzuwärmenden ersten Randschicht (12) in einem Bereich von 0,5 mm bis 100 mm, vorzugsweise im Bereich von 1 mm bis 60 mm liegt.

11. Verfahren nach einem der vorhergehenden Ansprüche, **dadurch gekennzeichnet, dass** die Dicke des Primers (13) im Bereich von 1 µm bis 5 mm, vorzugsweise im Bereich von 10 µm bis 3 mm liegt.

## Claims

1. A method for integrally joining two workpieces (11, 19) made of dissimilar thermoplastic polymers with the aid of a preferably thermoplastic polymer primer (13) as a connection layer, including the following steps of:
• providing a first workpiece (11) made of a thermoplastic polymer and comprising a first edge layer (12),
• providing a second workpiece (19) made of a thermoplastic polymer and having a second edge layer (20), the thermoplastic polymer being dissimilar with respect to the thermoplastic polymer of the first workpiece (11),
• preheating the first edge layer (12),
• applying the primer (13) to the preheated first edge layer (12),
• bringing the first edge layer (12) provided with the primer (13) into contact with the second edge layer (19),
• integrally bonding the first edge layer (12) to the second edge layer (19), **characterized in that** during the application of the primer (13) the preheated first edge layer (12) has a temperature in the range between the extrapolated onset of the glass transition temperature for amorphous plastics materials, or of the initial peak temperature of the melting range for semi-crystalline plastics materials, and the initial stage temperature of the decomposition of the thermoplastic polymer of the first edge layer (12).

2. The method according to claim 1, **characterized in that** the first edge layer (12) is preheated in such a way and for such a time that the temperature of the first edge layer (12) is in the range between the extrapolated onset of the glass transition temperature for amorphous plastics materials, or of the initial peak temperature of the melting range for semi-crystalline plastics materials, and the initial stage temperature of the decomposition of the thermoplastic polymer of the first edge layer (12).

3. The method according to claim 1 or 2, **characterized in that** during preheating the temperature of the first edge layer (12) is continuously recorded to make it possible to regulate the preheating using the recorded value.

4. The method according to one of the preceding claims, **characterized in that** during the application of the primer (13) the preheated first edge layer (12) has a temperature that is lower than the decomposition temperature of the primer (13).

5. The method according to one of the preceding claims, **characterized in that** the first edge layer (12) is further heated during application in order to avoid the temperature of the first edge layer (12) dropping before the primer (13) is applied.

6. The method according to one of the preceding claims, **characterized in that** before the first edge layer (12) is preheated, the first edge layer (12) is pretreated by means of corona discharge and/or plasma arcs and/or flame treatment and/or radiation and/or a chemical and/or mechanical pretreatment of the first edge layer (12).

7. The method according to one of the preceding claims, **characterized in that** a melt layer is produced in the first edge layer (12) during preheating, which preferably has a thickness in the range of from 0.05 mm to 6 mm, more preferably in the range of from 0.1 mm to 5 mm.

8. The method according to one of the preceding claims, **characterized in that** a heating device (2) is used for preheating the first edge layer (12), the first edge layer (12) being preheated by way of a relative movement between the first workpiece (11) and the heating device (2) in the range of from 10 mm/min to 100 m/min, preferably in the range of from 10 mm/min to 30 m/min.

9. The method according to one of the preceding claims, **characterized in that** the primer (13) is applied to the first edge layer (12) by means of a dosing device (4), by way of a relative movement between the first workpiece (11) and the dosing device (4) of from 10 mm/min to 100 m/min, preferably in the range of from 10 mm/min to 30 m/min, and **in that** the edge layer (12) to which the primer (13) is applied is heated by means of a heating device (2) by way of a relative movement between the first workpiece (11) and the heating device (2) before the primer (13) is applied, the dosing device (4) or a nozzle (5) of the dosing device (4) for applying the primer (13) simultaneously trailing the heating device (2) at a time interval in the range of from 0.1 s to 10 s.

10. The method according to one of the preceding claims, **characterized in that** a heating device (2) is used for preheating the first edge layer (12), the distance during preheating between the heating device (2) and the first edge layer (12) which is to be preheated being in a range of from 0.5 mm to 100 mm, preferably in the range of from 1 mm to 60 mm.

11. The method according to one of the preceding claims, **characterized in that** the thickness of the primer (13) is in the range of from 1 µm to 5 mm, preferably in the range of from 10 µm to 3 mm.

## Revendications

1. Procédé d'assemblage par liaison de matière de deux pièces (11, 19) en polymères thermoplastiques différents à l'aide d'un primaire (13), de préférence en polymère thermoplastique, comprenant les étapes suivantes :
• fourniture d'une première pièce (11) en un polymère thermoplastique présentant une première couche marginale (12),
• fourniture d'une seconde pièce (19) en un polymère thermoplastique présentant une seconde couche marginale (20), le polymère thermoplastique étant différent du polymère thermoplastique de la première pièce (11),
• préchauffage de la première couche marginale (12),
• application du primaire (13) sur la première couche marginale préchauffée (12),
• mise en contact de la première couche marginale (12) comprenant le primaire (13) avec la seconde couche marginale (19),
• assemblage par liaison de matière de la première couche marginale (12) avec la seconde couche marginale (19), **caractérisé en ce que** la première couche marginale (12) préchauffée pendant l'application du primaire (13) a une température comprise entre le début extrapolé de la température de transition vitreuse pour matières plastiques amorphes ou de la température initiale maximale de la plage de fusion pour matières plastiques semi-cristallines et la température initiale par paliers de la décomposition du polymère thermoplastique de la première couche marginale (12).

2. Procédé selon la revendication 1, **caractérisé en ce que** la première couche marginale (12) est préchauffée de telle sorte et si longtemps que la température de la première couche marginale (12) soit comprise entre le début extrapolé de la température de transition vitreuse pour matières plastiques amorphes ou de la température initiale maximale de la plage de fusion pour matières plastiques semi-cristallines et la température initiale par paliers de la décomposition du polymère thermoplastique de la première couche marginale (12).

3. Procédé selon l'une des revendications 1 ou 2, **caractérisé en ce que** la température de la première couche marginale (12) est détectée en continu pendant le préchauffage afin de permettre une régulation du préchauffage à partir de la valeur détectée.

4. Procédé selon l'une des revendications précédentes, **caractérisé en ce que**, pendant l'application du primaire (13), la première couche marginale (12) préchauffée a une température inférieure à la température de décomposition du primaire (13).

5. Procédé selon l'une des revendications précédentes, **caractérisé en ce que** la première couche marginale (12) est davantage chauffée pendant l'application afin d'éviter une chute de température de la première couche marginale (12) avant l'application du primaire (13).

6. Procédé selon l'une des revendications précédentes, **caractérisé en ce que**, avant le préchauffage de la première couche marginale (12), celle-ci est prétraitée au moyen d'une décharge corona et/ou d'un arc plasma et/ou d'un flammage et/ou d'une irradiation et/ou d'un prétraitement chimique et/ou mécanique de la première couche marginale (12).

7. Procédé selon l'une des revendications précédentes, **caractérisé en ce que**, lors du préchauffage, une couche de fusion est formée dans la première couche marginale (12), laquelle a de préférence une épaisseur comprise entre 0,05 et 6 mm, de préférence entre 0,1 et 5 mm.

8. Procédé selon l'une des revendications précédentes, **caractérisé en ce qu'**un dispositif de chauffage (2) est utilisé pour préchauffer la première couche marginale (12), le préchauffage de la première couche marginale (12) s'effectuant avec un mouvement relatif situé dans la plage comprise entre 10 mm/min et 100 m/min, de préférence entre 10 mm/min et 30 m/min entre la première pièce (11) et le dispositif de chauffage (2).

9. Procédé selon l'une des revendications précédentes, **caractérisé en ce que** le primaire (13) est appliqué au moyen d'un dispositif de dosage (4) sur la première couche marginale (12) avec un mouvement relatif de 10 mm/min à 100 m/min, de préférence dans la plage comprise entre 10 mm/min et 30 m/min, entre la première pièce (11) et le dispositif de dosage (4), et **en ce que**, au moyen d'un dispositif de chauffage (2), la couche marginale (12) sur laquelle le primaire (13) est appliqué est chauffée avec un mouvement relatif entre la première pièce (11) et le dispositif de chauffage (2) avant l'application du primaire (13), le dispositif de chauffage (2) précédant simultanément le dispositif de dosage (4) ou une buse (5) du dispositif de dosage (4) pour l'application du primaire (13) dans un intervalle de temps compris entre 0,1 et 10 s.

10. Procédé selon l'une des revendications précédentes, **caractérisé en ce qu'**un dispositif de chauffage (2) est utilisé pour préchauffer la première couche marginale (12), dans lequel, pendant le préchauffage, la distance entre le dispositif de chauffage (2) et la première couche marginale (12) à préchauffer est comprise entre 0,5 et 100 mm, de préférence entre 1 et 60 mm.

11. Procédé selon l'une des revendications précédentes, **caractérisé en ce que** l'épaisseur du primaire (13) est comprise entre 1 µm et 5 mm, de préférence entre 10 µm et 3 mm.
